# EUROPEAN PATENT APPLICATION

(11) **EP 4 177 742 A1**
(43) Date of publication of application: **10.05.2023**
(21) Application number: 21838336.2
(22) Date of filing: 23.06.2021
(51) Int. Cl.: G06F 9/455

(54) **MULTITENANCY MANAGEMENT METHOD AND APPARATUS**

(30) Priority: 07.07.2020 CN 202010647800
(71) Applicant: Huawei Technologies Co., Ltd., Shenzhen, Guangdong 518129 (CN)
(72) Inventor: XIA, Haitao, Shenzhen, Guangdong 518129 (CN)
(74) Representative: Pfenning, Meinig & Partner mbB
(86) International application number: PCT/CN2021/101883
(87) International publication number: WO 2022/007631

(57) **Abstract**

A multi-tenancy management method and apparatus are provided. In the method, indication information indicates whether deployment locations of a container object invoked by a VNF instance and another container object invoked by the VNF instance are in a same spatial scope, so that an isolation requirement for deployment of the VNF instance is met, and security of the VNF instance is ensured. In addition, the spatial scope, for example, a container cluster or a namespace, is usually created by an NFVO. In the foregoing solution, a VNFM may request, based on a tenant identifier carried in an instantiation request of the VNF, a CISM to deploy, based on the indication information, the container object in a spatial scope managed by the CISM. This can avoid that a VNFM can manage a container object only when the VNFM senses a spatial scope in which the container object is deployed.

## Description

This application claims priority to Chinese Patent Application No. 202010647800.8, filed with the China National Intellectual Property Administration on July 7, 2020 and entitled "MULTI-TENANCY MANAGEMENT METHOD AND APPARATUS", which is incorporated herein by reference in its entirety.

### TECHNICAL FIELD

This application relates to the field of communication technologies, and in particular, to a multi-tenancy management method and apparatus.

### BACKGROUND

A container as a service (container as a service, CaaS) is a new virtualization technology used by a telecommunication carrier network in a cloud-based transformation process oriented toward an internet technology (internet technology, IT). In the CaaS technology, a virtualised network function (virtualised network function, VNF) invokes one or more container objects to implement a function of the VNF, and generates a container-based VNF. Lifecycle management of the container-based VNF is implemented by managing the container objects invoked by the container-based VNF.

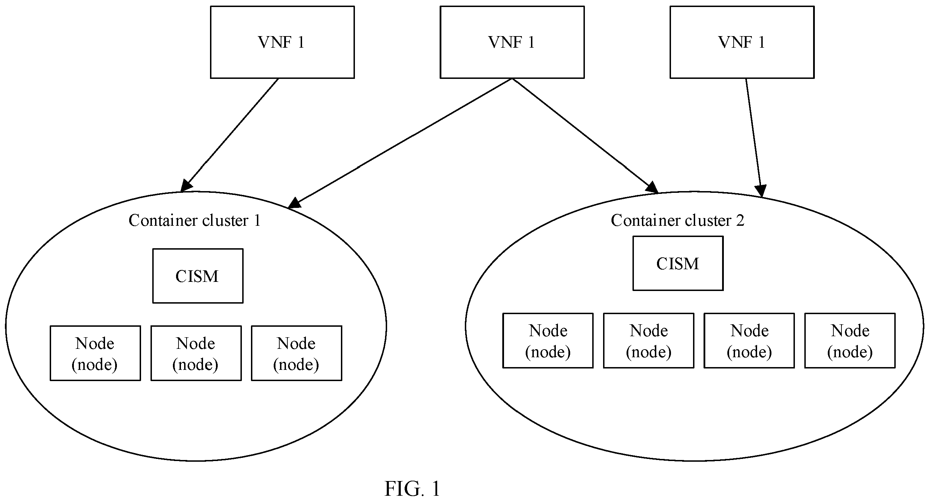

In the CaaS technology, each container object needs to be scheduled to run on a corresponding node resource (including a computing resource, a storage resource, a network resource, or the like) in a container cluster. Therefore, for the container cluster, a plurality of container-based VNFs are multi-tenancy (multi-tenancy) of the container cluster, and a plurality of tenants share node resources in the container cluster. FIG. 1 is a schematic diagram of an example of multi-tenancy of a container cluster. FIG. 1 includes two container clusters: a container cluster 1 and a container cluster 2. The container cluster 1 provides a node resource for a tenant 1 (for example, a VNF 1). The container cluster 1 and the container cluster 2 provide a node resource for a tenant 2 (for example, a VNF 2). The container cluster 2 provides a node resource for a tenant 3 (for example, a VNF 3).

For security of an application in a tenant, container objects invoked by tenants may need to be isolated. Therefore, how to manage the foregoing plurality of tenants is an urgent problem that needs to be resolved currently.

### SUMMARY

This application provides a multi-tenancy management method and apparatus, to manage a plurality of tenants that invoke a container cluster.

According to a first aspect, a multi-tenancy management method is provided. The method is performed by a virtualised network function manager VNFM. In the method, the VNFM first receives an instantiation request of a VNF, where the instantiation request includes a tenant identifier of a container object invoked by the VNF instance. The VNFM obtains indication information that indicates whether the container object invoked by the VNF and another container object in a same tenant in which the container object is located are deployed in a same spatial scope. The first message, an identifier of the container object invoked by the VNF instance, and the tenant identifier of the container object invoked by the VNF instance are carried in a container object creation request, and are sent to a container infrastructure service management CISM, so that the CISM creates, based on information in the creation request, the container object invoked by the VNF instance. The spatial scope includes a container cluster and/or a namespace in the container cluster. The VNFM receives a container object creation response sent by the CISM, to complete instantiation of the VNF instance.

In the foregoing technical solution, the indication information indicates whether deployment locations of the container object invoked by the VNF instance and another container object invoked by the VNF instance are in a same spatial scope, so that an isolation requirement for deployment of the VNF instance is met, and security of the VNF instance is ensured. In addition, the spatial scope, for example, a container cluster or a namespace, is usually created by an NFVO. In the foregoing solution, the VNFM may request, based on the tenant identifier carried in the instantiation request of the VNF, the CISM to deploy, based on the indication information, the container object in a spatial scope managed by the CISM. This can avoid that a VNFM can manage a container object only when the VNFM senses a spatial scope in which the container object is deployed.

Further, the foregoing descriptions of the spatial scope are merely two examples. In this application, the spatial scope may alternatively be a spatial scope set of another granularity. This is not limited herein.

In a possible design, the indication information may include but is not limited to the following two cases.

### Case 1

The indication information includes an affinity/anti-affinity rule of the container object. The affinity/anti-affinity rule includes an identifier of an affinity/anti-affinity group in which the container object is located, and an application scope of the affinity/anti-affinity group. The application scope includes the spatial scope.

In the foregoing technical solution, the indication information may be indicated by the affinity/anti-affinity rule. In addition, in this application, an application scope of the affinity/anti-affinity group in the affinity/anti-affinity rule may not only include a site, a zone, or the like, but also include the spatial scope in this application, so that an application scope of the affinity/anti-affinity rule can be increased.

In a possible design, the affinity/anti-affinity rule may be stored in a virtualised network function descriptor VNFD. In this case, the VNFM may obtain the affinity/anti-affinity rule from a VNFD corresponding to the VNF instance.

### Case 2

The indication information includes an identifier of a spatial scope used in a lifecycle management operation of the VNF instance.

In the foregoing technical solution, the indication information may be indicated by the lifecycle management operation, and the identifier of the spatial scope may be directly indicated in the lifecycle management operation. This implementation is simple.

In a possible design, when the VNFM needs to obtain the indication information, the VNFM sends, to a network functions virtualization orchestrator NFVO, a lifecycle management grant request that includes a deployment location constraint of the VNF, where a scope of the deployment location constraint includes the spatial scope; and receives a lifecycle management grant response sent by the NFVO, where the lifecycle management grant response includes a scope of the deployment location constraint allowed by the NFVO to be used by the VNFM in the lifecycle management operation, and the scope of the deployment location constraint allowed by the NFVO is the indication information.

In the foregoing technical solution, the scope of the deployment location constraint may not only include a site, a zone, or the like, but also include the spatial scope in this application, so that an application scope of the deployment location constraint can be increased.

In addition, in the foregoing technical solution, the VNFM may obtain the indication information in any one of the foregoing two different manners, so that flexibility of the multi-tenancy management method can be improved.

In a possible design, the tenant identifier of the container object invoked by the VNF instance is an identifier of the VNF instance or an identifier of a container object package used by the VNF instance.

In the foregoing technical solution, the tenant identifier may be indicated by using a plurality of type s of information, so that flexibility of the solution can be improved.

According to a second aspect, a multi-tenancy management method is provided. The method is performed by a network functions virtualization orchestrator NFVO. In the method, the NFVO first receives an instantiation request of a network service NS instance, determines a tenant identifier of a container object invoked by a virtualised network function VNF instance included in the NS instance, and obtains a network service descriptor file NSD corresponding to the NS instance, where the NSD includes an affinity/anti-affinity group between VNF instances included in the NS instance. Finally, the NFVO includes the affinity/anti-affinity group and the tenant identifier in a multi-tenancy management policy creation request, and sends the request to a container infrastructure service management CISM, so that after receiving the creation request, the CISM creates a multi-tenancy management policy based on the affinity/anti-affinity group and the tenant identifier. The multi-tenancy management policy indicates whether container objects separately invoked by the tenant and another tenant are deployed in a same spatial scope. The spatial scope includes a container cluster and/or a namespace in the container cluster. The tenant and the another tenant are tenants of container objects invoked by VNF instances included in the NS instance.

In the foregoing technical solution, the NFVO may pre-create, in the CISM, a multi-tenancy management policy corresponding to each tenant. The multi-tenancy management policy may indicate whether container objects invoked by different tenants are deployed in a same spatial scope, so that an isolation requirement for deployment of different VNF instances is met, and security of the VNF instance is ensured. In addition, in this application, an application scope of the multi-tenancy management policy may not only include a site, a zone, or the like, but also include the spatial scope in this application, so that the application scope of the multi-tenancy management policy can be increased.

Further, the foregoing descriptions of the spatial scope are merely two examples. In this application, the spatial scope may alternatively be a spatial scope set of another granularity. This is not limited herein.

In a possible design, the NFVO may send, to a virtualised network function manager VNFM, a VNF instance identifier creation request for creating an identifier of the VNF instance included in the NS, and receive a VNF instance identifier creation response sent by the VNFM. The VNF instance identifier creation response includes the identifier of the VNF instance included in the NS instance, so that the NFVO maps the identifier of the VNF instance included in the NS instance to a tenant identifier, in other words, the tenant identifier of the container object invoked by the virtualised network function VNF instance included in the NS instance is determined.

In a possible design, the tenant identifier is an identifier of a container object package used by the VNF instance.

In the foregoing technical solution, the tenant identifier may be obtained by mapping the identifier of the VNF instance, or the tenant identifier may be obtained by mapping the identifier of the container object package used by the VNF instance, so that flexibility of the multi-tenancy management method can be improved.

In a possible design, the NFVO may further receive an NS instance termination request that includes an identifier of the NS instance, determine, based on the identifier of the NS instance, the tenant identifier of the container object invoked by the VNF instance included in the NS instance, and include the tenant identifier in a multi-tenancy management policy deletion request and send the multi-tenancy management policy deletion request to the CISM, so that the CISM deletes the multi-tenancy management policy related to the tenant identifier.

In the foregoing technical solution, after the NS instance is terminated, a multi-tenancy management policy that is of a tenant corresponding to the NS instance and that is in the CISM may also be deleted, to reduce storage space occupied by an invalid multi-tenancy management policy.

In a possible design, the multi-tenancy management policy includes the tenant identifier of the container object, an identifier of an affinity/anti-affinity group in which a container object included in the tenant is located, an affinity/anti-affinity type, and an application scope of the affinity/anti-affinity group. The application scope includes the spatial scope.

In the foregoing technical solution, an application scope of the affinity/anti-affinity group in the multi-tenancy management policy may not only include a site, a zone, or the like, but also include the spatial scope in this application, so that the application scope of the multi-tenancy management policy can be increased.

According to a third aspect, a multi-tenancy management method is provided. The method is performed by a container infrastructure service management CISM. In the method, the CISM first receives a container object creation request sent by a virtualised network function manager VNFM. The creation request includes an identifier of a container object that the VNFM requests to create, a tenant identifier of the container object, and indication information. The indication information indicates whether the container object and another container object in a same tenant in which the container object is located are deployed in a same spatial scope. The spatial scope includes a container cluster and/or a namespace in the container cluster. Then, the CISM creates the container object based on the identifier of the container object, the tenant identifier of the container object, and the indication information, and sends a container object creation response to the VNFM.

According to the foregoing technical solution, indication information indicates whether a container object and another container object in a same tenant in which the container object is located are deployed in a same spatial scope, so that a CISM may create the container object based on the indication information, to meet an isolation requirement of a VNF instance for container object deployment, and ensure security of the VNF instance.

Further, the foregoing descriptions of the spatial scope are merely two examples. In this application, the spatial scope may alternatively be a spatial scope set of another granularity. This is not limited herein.

In a possible design, the indication information may include but is not limited to the following two cases.

### Case 1

The indication information includes an affinity/anti-affinity rule of the container object. The affinity/anti-affinity rule includes an identifier of an affinity/anti-affinity group in which the container object is located, and an application scope of the affinity/anti-affinity group. The application scope includes the spatial scope.

### Case 2

The indication information includes an identifier of a spatial scope used in a lifecycle management operation of the tenant of the container object.

In the foregoing technical solution, the indication information may be indicated by using any one of the foregoing two different types of information, so that flexibility of the multi-tenancy management method can be improved.

In a possible design, because the indication information is different, processes of creating the container object by the CISM based on the indication information are also different.

To be specific, when the indication information is in the case 1, the CISM first determines that a deployment location of the another container object of the tenant in which the container object is located is a first spatial scope, and when the indication information indicates that the container object and the another container object in the same tenant in which the container object is located are deployed in a same spatial scope, creates the container object in the first spatial scope, or when the indication information indicates that the container object and the another container object in the same tenant in which the container object is located are not deployed in a same spatial scope, creates the container object in a second spatial scope. The first spatial scope is different from the second spatial scope.

When the indication information is in the case 2, the CISM directly creates the container object in a spatial scope corresponding to the identifier of the spatial scope.

In the foregoing technical solution, the CISM may create the container object in a plurality of manners, so that flexibility of the CISM can be improved.

In a possible design, the CISM may further receive a multi-tenancy management policy creation request sent by a network functions virtualization orchestrator NFVO. The creation request includes a tenant identifier of a container object invoked by a virtualised network function VNF instance and an affinity/anti-affinity group between the VNF instance and another VNF instance of an NS instance. Then, the CISM creates a multi-tenancy management policy based on the affinity/anti-affinity group and the tenant identifier. The multi-tenancy management policy indicates whether container objects separately invoked by the tenant and another tenant are deployed in a same spatial scope. The spatial scope includes a container cluster and/or a namespace in the container cluster. The tenant and the another tenant are tenants of container objects invoked by VNF instances included in the NS instance.

For descriptions of the multi-tenancy management policy, refer to corresponding content in the second aspect. Details are not described herein again.

In a possible design, the CISM may further create the container object based on the identifier of the container object, the tenant identifier of the container object, the indication information, and a multi-tenancy management policy created by the NFVO, so that flexibility of the CISM can be improved.

In a possible design, when the indication information includes an affinity/anti-affinity rule of the container object, the CISM first determines that a deployment location of the another container object of the tenant in which the container object is located is a third spatial scope, and if it is determined that the third spatial scope meets the multi-tenancy management policy, and when the indication information indicates that the container object and the another container object in the same tenant in which the container object is located are deployed in a same spatial scope, creates the container object in the third spatial scope, or when the indication information indicates that the container object and the another container object in the same tenant in which the container object is located are not deployed in a same spatial scope, creates the container object in a fourth spatial scope. The fourth spatial scope meets the multi-tenancy management policy.

In a possible design, the CISM may further receive a multi-tenancy management policy deletion request sent by the NFVO. The deletion request includes the tenant identifier. Then, the CISM deletes the multi-tenancy management policy related to the tenant identifier, so that an invalid multi-tenancy management policy is deleted, and utilization of storage space in the CISM is improved.

According to a fourth aspect, a multi-tenancy management apparatus is provided. The apparatus has a function of implementing the VNFM in the first aspect. The function may be implemented by hardware, or may be implemented by hardware executing corresponding software. The hardware or the software includes one or more modules corresponding to the foregoing function. In a possible design, a structure of the apparatus includes a processor and a transceiver. The processor is configured to support the apparatus in performing a corresponding function in the foregoing method. The transceiver is configured to implement communication between the apparatus and the NFVO and communication between the apparatus and the CISM. The apparatus may further include a memory. The memory is configured to be coupled to the processor, and the memory stores program instructions and data that are necessary for the apparatus.

In a possible design, the apparatus includes a processor and a transceiver.

The transceiver receives, under control of the processor, an instantiation request of a VNF. The instantiation request includes a tenant identifier of a container object invoked by the VNF.

The processor obtains indication information. The indication information indicates whether the container object invoked by the VNF and another container object in a same tenant in which the container object is located are deployed in a same spatial scope. The spatial scope includes a container cluster and/or a namespace in the container cluster.

The transceiver sends, under control of the processor, a container object creation request to a container infrastructure service management CISM, where the creation request includes an identifier of the container object, the tenant identifier of the container object invoked by the VNF, and the indication information; and receives a container object creation response sent by the CISM, to complete instantiation of the VNF.

For descriptions of the logical spatial scope, the tenant identifier, and the indication information, refer to corresponding content in the first aspect. Details are not described herein again.

In a possible design, the processor obtains an affinity/anti-affinity rule from a virtualised network function descriptor VNFD corresponding to the VNF.

In a possible design, the transceiver sends, under control of the processor, a lifecycle management grant request of the VNF to a network functions virtualization orchestrator NFVO, where the lifecycle management grant request includes a deployment location constraint of the VNF, and a scope of the deployment location constraint includes the spatial scope; and receives a lifecycle management grant response sent by the NFVO, where the lifecycle management grant response includes a scope of the deployment location constraint allowed by the NFVO to be used by the apparatus in a lifecycle management operation. The scope of the deployment location constraint allowed by the NFVO is the indication information.

According to a fifth aspect, a multi-tenancy management apparatus is provided. The apparatus has a function of implementing the NFVO in the second aspect. The function may be implemented by hardware, or may be implemented by hardware executing corresponding software. The hardware or the software includes one or more modules corresponding to the foregoing function. In a possible design, a structure of the apparatus includes a processor and a transceiver. The processor is configured to support the apparatus in performing a corresponding function in the foregoing method. The transceiver is configured to implement communication between the apparatus and the VNFM and communication between the apparatus and the CISM. The apparatus may further include a memory. The memory is configured to be coupled to the processor, and the memory stores program instructions and data that are necessary for the apparatus.

In a possible design, the apparatus includes a processor and a transceiver.

The transceiver receives, under control of the processor, an instantiation request of a network service NS instance.

The processor determines a tenant identifier of a container object invoked by a virtualised network function VNF instance included in the NS instance; and obtains a network service descriptor file NSD corresponding to the NS instance. The NSD includes an affinity/anti-affinity group between the VNF instances included in the NS instance.

The transceiver sends, under control of the processor, a multi-tenancy management policy creation request to a container infrastructure service management CISM. The creation request includes the affinity/anti-affinity group and the tenant identifier. The CISM creates a multi-tenancy management policy based on the affinity/anti-affinity group and the tenant identifier. The multi-tenancy management policy indicates whether container objects separately invoked by the tenant and another tenant are deployed in a same spatial scope. The spatial scope includes a container cluster and/or a namespace in the container cluster. The tenant and the another tenant are tenants of container objects invoked by VNF instances included in the NS instance.

For descriptions of the logical spatial scope and the multi-tenancy management policy, refer to corresponding content in the second aspect. Details are not described herein again.

In a possible design, the transceiver sends, under control of the processor, a VNF instance identifier creation request to a virtualised network function manager VNFM, where the VNF instance identifier creation request is for creating an identifier of the VNF instance included in the NS; and receives a VNF instance identifier creation response sent by the VNFM, where the VNF instance identifier creation response includes the identifier of the VNF instance included in the NS instance. The processor maps the identifier of the VNF instance included in the NS instance to the tenant identifier.

In a possible design, the tenant identifier is an identifier of a container object package used by the VNF instance.

In a possible design, the transceiver receives, under control of the processor, an NS instance termination request, where the termination request includes an identifier of the NS instance. The processor determines, based on the identifier of the NS instance, the tenant identifier of the container object invoked by the VNF instance included in the NS instance. The transceiver sends, under control of the processor, a multi-tenancy management policy deletion request to the CISM, where the deletion request includes the tenant identifier. The CISM deletes the multi-tenancy management policy related to the tenant identifier.

According to a sixth aspect, a multi-tenancy management apparatus is provided. The apparatus has a function of implementing the CISM in the third aspect. The function may be implemented by hardware, or may be implemented by hardware executing corresponding software. The hardware or the software includes one or more modules corresponding to the foregoing function. In a possible design, a structure of the apparatus includes a processor and a transceiver. The processor is configured to support the apparatus in performing a corresponding function in the foregoing method. The transceiver is configured to implement communication between the apparatus and the VNFM and communication between the apparatus and the NFVO. The apparatus may further include a memory. The memory is configured to be coupled to the processor, and the memory stores program instructions and data that are necessary for the apparatus.

In a possible design, the apparatus includes a processor and a transceiver.

The transceiver receives, under control of the processor, a container object creation request sent by a virtualised network function manager VNFM. The creation request includes an identifier of a container object that the VNFM requests to create, a tenant identifier of the container object, and indication information. The indication information indicates whether the container object and another container object in a same tenant in which the container object is located are deployed in a same spatial scope. The spatial scope includes a container cluster and/or a namespace in the container cluster.

The processor creates the container object based on the indication information, and controls the transceiver to send a container object creation response to the VNFM.

In a possible design, the indication information includes an affinity/anti-affinity rule of the container object. The affinity/anti-affinity rule includes an identifier of an affinity/anti-affinity group in which the container object is located, and an application scope of the affinity/anti-affinity group. The application scope includes the spatial scope.

In a possible design, the processor determines that a deployment location of the another container object of the tenant in which the container object is located is a first spatial scope, and when the indication information indicates that the container object and the another container object in the same tenant in which the container object is located are deployed in a same spatial scope, creates the container object in the first spatial scope, or when the indication information indicates that the container object and the another container object in the same tenant in which the container object is located are not deployed in a same spatial scope, creates the container object in a second spatial scope. The first spatial scope is different from the second spatial scope.

In a possible design, the indication information includes an identifier of a spatial scope used in a lifecycle management operation of the tenant of the container object.

In a possible design, the processor creates the container object in a spatial scope corresponding to the identifier of the spatial scope.

In a possible design, the transceiver receives, under control of the processor, a multi-tenancy management policy creation request sent by a network functions virtualization orchestrator NFVO. The creation request includes a tenant identifier of a container object invoked by a virtualised network function VNF instance and an affinity/anti-affinity group between the VNF instance and another VNF instance of an NS instance. Then, the processor creates a multi-tenancy management policy based on the affinity/anti-affinity group and the tenant identifier. The multi-tenancy management policy indicates whether container objects separately invoked by the tenant and another tenant are deployed in a same spatial scope. The spatial scope includes a container cluster and/or a namespace in the container cluster. The tenant and the another tenant are tenants of container objects invoked by VNF instances included in the NS instance.

In a possible design, the processor creates the container object based on the identifier of the container object, the tenant identifier of the container object, the indication information, and the multi-tenancy management policy.

In a possible design, the indication information includes an affinity/anti-affinity rule of the container object. The processor determines that a deployment location of the another container object of the tenant in which the container object is located is a third spatial scope, and when it is determined that the third spatial scope meets the multi-tenancy management policy, and when the indication information indicates that the container object and the another container object in the same tenant in which the container object is located are deployed in a same spatial scope, creates the container object in the third spatial scope, or when the indication information indicates that the container object and the another container object in the same tenant in which the container object is located are not deployed in a same spatial scope, creates the container object in a fourth spatial scope. The fourth spatial scope meets the multi-tenancy management policy.

In a possible design, the transceiver receives, under control of the processor, a multi-tenancy management policy deletion request sent by the NFVO. The deletion request includes the tenant identifier. Then, the processor deletes the multi-tenancy management policy related to the tenant identifier.

According to a seventh aspect, a multi-tenancy management apparatus is provided. The apparatus has a function of implementing the VNFM in the foregoing method. The communication apparatus may include corresponding functional modules, such as a receiving module, an obtaining module, and a sending module, which are respectively configured to implement the steps in the method in the first aspect.

In a possible design, the apparatus includes a receiving module, an obtaining module, and a sending module.

The receiving module is configured to receive an instantiation request of a VNF. The instantiation request includes a tenant identifier of a container object invoked by the VNF.

The obtaining module is configured to obtain indication information. The indication information indicates whether the container object invoked by the VNF and another container object in a same tenant in which the container object is located are deployed in a same spatial scope. The spatial scope includes a container cluster and/or a namespace in the container cluster.

The sending module is configured to send a container object creation request to a container infrastructure service management CISM. The creation request includes an identifier of the container object, the tenant identifier of the container object invoked by the VNF, and the indication information.

The receiving module is further configured to receive a container object creation response sent by the CISM, to complete instantiation of the VNF.

For descriptions of the spatial scope, the tenant identifier, and the indication information, refer to corresponding content in the first aspect. Details are not described herein again.

In a possible design, the obtaining module is specifically configured to:
obtain an affinity/anti-affinity rule from a virtualised network function descriptor VNFD corresponding to the VNF.

In a possible design, the sending module is specifically configured to:
send a lifecycle management grant request of the VNF to a network functions virtualization orchestrator NFVO, where the lifecycle management grant request includes a deployment location constraint of the VNF, and a scope of the deployment location constraint includes the spatial scope.

The receiving module is specifically configured to receive a lifecycle management grant response sent by the NFVO, where the lifecycle management grant response includes a scope of the deployment location constraint allowed by the NFVO to be used by the apparatus in a lifecycle management operation, and the scope of the deployment location constraint allowed by the NFVO is the indication information.

According to an eighth aspect, a multi-tenancy management apparatus is provided. The apparatus has a function of implementing the NFVO in the foregoing method. The communication apparatus may include corresponding functional modules, such as a receiving module, a determining module, an obtaining module, and a sending module, which are respectively configured to implement the steps in the method in the second aspect.

In a possible design, the apparatus includes a receiving module, a determining module, an obtaining module, and a sending module.

The receiving module is configured to receive an instantiation request of a network service NS instance.

The determining module is configured to determine a tenant identifier of a container object invoked by a virtualised network function VNF instance included in the NS instance.

The obtaining module is configured to obtain a network service descriptor file NSD corresponding to the NS instance, where the NSD includes an affinity/anti-affinity group between VNF instances included in the NS instance.

The sending module is configured to send a multi-tenancy management policy creation request to a container infrastructure service management CISM. The creation request includes the affinity/anti-affinity group and the tenant identifier. The CISM creates a multi-tenancy management policy based on the affinity/anti-affinity group and the tenant identifier. The multi-tenancy management policy indicates whether container objects separately invoked by the tenant and another tenant are deployed in a same spatial scope. The spatial scope includes a container cluster and/or a namespace in the container cluster. The tenant and the another tenant are tenants of container objects invoked by VNF instances included in the NS instance.

For descriptions of the spatial scope and the multi-tenancy management policy, refer to corresponding content in the second aspect. Details are not described herein again.

In a possible design, the sending module is specifically configured to:
send a VNF instance identifier creation request to a virtualised network function manager VNFM, where the VNF instance identifier creation request is for creating an identifier of the VNF instance included in the NS.

The receiving module is specifically configured to receive a VNF instance identifier creation response sent by the VNFM, where the VNF instance identifier creation response includes the identifier of the VNF instance included in the NS instance.

The determining module is specifically configured to map the identifier of the VNF instance included in the NS instance to the tenant identifier.

In a possible design, the tenant identifier is an identifier of a container object package used by the VNF instance.

In a possible design, the receiving module is further configured to:
receive an NS instance termination request, where the termination request includes an identifier of the NS instance.

The determining module is further configured to determine, based on the identifier of the NS instance, the tenant identifier of the container object invoked by the VNF instance included in the NS instance.

The sending module is further configured to send a multi-tenancy management policy deletion request to the CISM, where the deletion request includes the tenant identifier. The CISM deletes the multi-tenancy management policy related to the tenant identifier.

According to a ninth aspect, a multi-tenancy management apparatus is provided. The apparatus has a function of implementing the CISM in the foregoing method. The communication apparatus may include corresponding functional modules, such as a receiving module, a creation module, and a sending module, which are respectively configured to implement the steps in the method in the third aspect.

In a possible design, the apparatus includes a receiving module, a creation module, and a sending module.

The receiving module is configured to receive a container object request sent by a virtualised network function manager VNFM, where the creation request includes an identifier of a container object that the VNFM requests to create, a tenant identifier of the container object, and indication information, the indication information indicates whether the container object and another container object in a same tenant in which the container object is located are deployed in a same spatial scope, and the spatial scope includes a container cluster and/or a namespace in the container cluster.

The creation module is configured to create the container object based on the identifier of the container object, the tenant identifier of the container object, and the indication information.

The sending module is configured to send a container object creation response to the VNFM.

For descriptions of the spatial scope and a multi-tenancy management policy, refer to corresponding content in the third aspect. Details are not described herein again.

In a possible design, the creation module is specifically configured to:
determine that a deployment location of the another container object of the tenant in which the container object is located is a first spatial scope; and
when the indication information indicates that the container object and the another container object in the same tenant in which the container object is located are deployed in a same spatial scope, create the container object in the first spatial scope; or when the indication information indicates that the container object and the another container object in the same tenant in which the container object is located are not deployed in a same spatial scope, create the container object in a second spatial scope, where the first spatial scope is different from the second spatial scope.

In a possible design, the creation module is specifically configured to:
create the container object in a spatial scope corresponding to the identifier of the spatial scope.

In a possible design, the receiving module is further configured to:
receive a multi-tenancy management policy creation request sent by a network functions virtualization orchestrator NFVO, where the creation request includes a tenant identifier of a container object invoked by a virtualised network function VNF instance and an affinity/anti-affinity group between the VNF instance and another VNF instance of an NS instance.

The creation module is further configured to create a multi-tenancy management policy based on the affinity/anti-affinity group and the tenant identifier, where the multi-tenancy management policy indicates whether container objects separately invoked by the tenant and another tenant are deployed in a same spatial scope, the spatial scope includes a container cluster and/or a namespace in the container cluster, and the tenant and the another tenant are tenants of container objects invoked by VNF instances included in the NS instance.

In a possible design, the creation module is specifically configured to:
create the container object based on the identifier of the container object, the tenant identifier of the container object, the indication information, and the multi-tenancy management policy.

In a possible design, the indication information includes an affinity/anti-affinity rule of the container object, and the creation module is specifically configured to:
determine that a deployment location of the another container object of the tenant in which the container object is located is a third spatial scope; and
determine that the third spatial scope meets the multi-tenancy management policy, and when the indication information indicates that the container object and the another container object in the same tenant in which the container object is located are deployed in a same spatial scope, create the container object in the third spatial scope; or
when the indication information indicates that the container object and the another container object in the same tenant in which the container object is located are not deployed in a same spatial scope, create the container object in a fourth spatial scope, where the fourth spatial scope meets the multi-tenancy management policy.

In a possible design, the receiving module is further configured to receive a multi-tenancy management policy deletion request sent by the NFVO, where the deletion request includes the tenant identifier; and the creation module is further configured to delete the multi-tenancy management policy related to the tenant identifier.

According to a tenth aspect, an embodiment of this application further provides a computer-readable storage medium, including instructions. When the instructions are run on a computer, the computer is enabled to perform the method performed by the VNFM in the first aspect, the NFVO in the second aspect, or the CISM in the third aspect.

According to an eleventh aspect, an embodiment of this application further provides a computer-readable storage medium, including instructions. When the instructions are run on a computer, the computer is enabled to perform the method performed by the VNFM in the first aspect, the NFVO in the second aspect, or the CISM in the third aspect.

According to a twelfth aspect, an embodiment of this application provides a chip system. The chip system includes a processor, and may further include a memory, configured to implement the method performed by the VNFM in the first aspect, the NFVO in the second aspect, or the CISM in the third aspect. The chip system may include a chip, or may include a chip and another discrete component.

For beneficial effects of the fourth aspect to the twelfth aspect and the implementations thereof, refer to the descriptions of beneficial effects of the method according to the first aspect, the second aspect, or the third aspect and the implementations thereof.

### BRIEF DESCRIPTION OF DRAWINGS

FIG. 1 is a schematic diagram of an example of a plurality of tenants in a container cluster;
FIG. 2 is a diagram of an architecture of a kubernetes container management and orchestration system;
FIG. 3 is a schematic diagram of an NFV architecture;
FIG. 4A and FIG. 4B are a flowchart of an example of a multi-tenancy management method according to an embodiment of this application;
FIG. 5 is a schematic diagram of an example of a spatial scope according to an embodiment of this application;
FIG. 6 is a flowchart of another example of a multi-tenancy management method according to an embodiment of this application;
FIG. 7 is a schematic diagram of a structure of an example of multi-tenancy management according to an embodiment of this application;
FIG. 8 is a schematic diagram of a structure of another example of multi-tenancy management according to an embodiment of this application;
FIG. 9 is a schematic diagram of a structure of another example of multi-tenancy management according to an embodiment of this application;
FIG. 10 is a schematic diagram of a structure of another example of multi-tenancy management according to an embodiment of this application;
FIG. 11 is a schematic diagram of a structure of another example of multi-tenancy management according to an embodiment of this application; and
FIG. 12 is a schematic diagram of a structure of another example of multi-tenancy management according to an embodiment of this application.

### DESCRIPTION OF EMBODIMENTS

To make the objectives, technical solutions, and advantages of embodiments of this application clearer, the following further describes embodiments of this application in detail with reference to the accompanying drawings.

In embodiments of this application, "a plurality of" means two or more. In view of this, in embodiments of this application, "a plurality of" may alternatively be understood as "at least two". "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects. In embodiments of this application, "invoke" and "use" may be used interchangeably.

Unless otherwise specified, ordinal numbers such as "first" and "second" in embodiments of this application are used to distinguish between a plurality of objects, and are not intended to limit a sequence, a time sequence, priorities, or importance of the plurality of objects.

The foregoing describes some concepts in embodiments of this application. The following describes technical features in embodiments of this application.

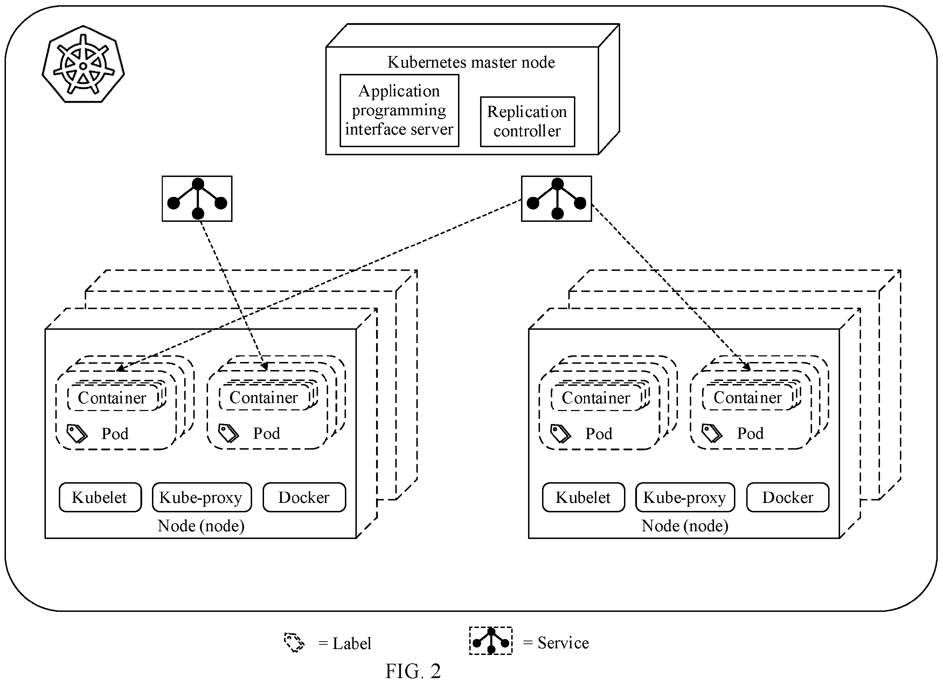

FIG. 2 is a diagram of an architecture of a kubernetes (K8S) container management and orchestration system, namely, an example of a CaaS technology.

Kubernetes divides infrastructure resources in a container cluster into a kubernetes master (master) node and a group of worker nodes (nodes). A group of processes related to container cluster management run on the master node (also referred to as a management node), for example, an application programming interface server (application programming interface server, API server) and a replication controller (replication controller, RC). These processes implement management functions such as resource management, container pod (Pod) scheduling, auto scaling, security control, system monitoring, and error correction of the entire container cluster. Kubelet, proxy, and docker components run on each worker node to manage a lifecycle of a pod on the node and implement a service agent function. As shown in FIG. 2, one pod may include at least one container. In this case, one pod may be understood as a container pod including one or more containers.

The API server provides a unique operation entry for resource objects. All other components need to operate resource data through an API interface provided by the API server, to implement related service functions by performing full query and listening for change on related resource data.

Controller manager is a management and control center of container clusters. The controller manager is for implementing automatic fault detection and recovery of a kubernetes cluster. For example, the pod may be replicated or removed based on a definition of the RC to ensure that a quantity of pod instances complies with the definition of the RC. Based on a management relationship between a service (service) and the pod, service endpoints (endpoints) object creation and update, node discovery, management, and status monitoring, locally cached image file deletion, and the like are completed.

The kubelet component is responsible for full lifecycle managements, such as creation, modification, monitoring, and deletion, of the pod on the node. In addition, the kubelet periodically reports status information of the node to the API server.

The proxy component is for implementing service proxy and software load balancing.

The docker component is an operating environment of a container.

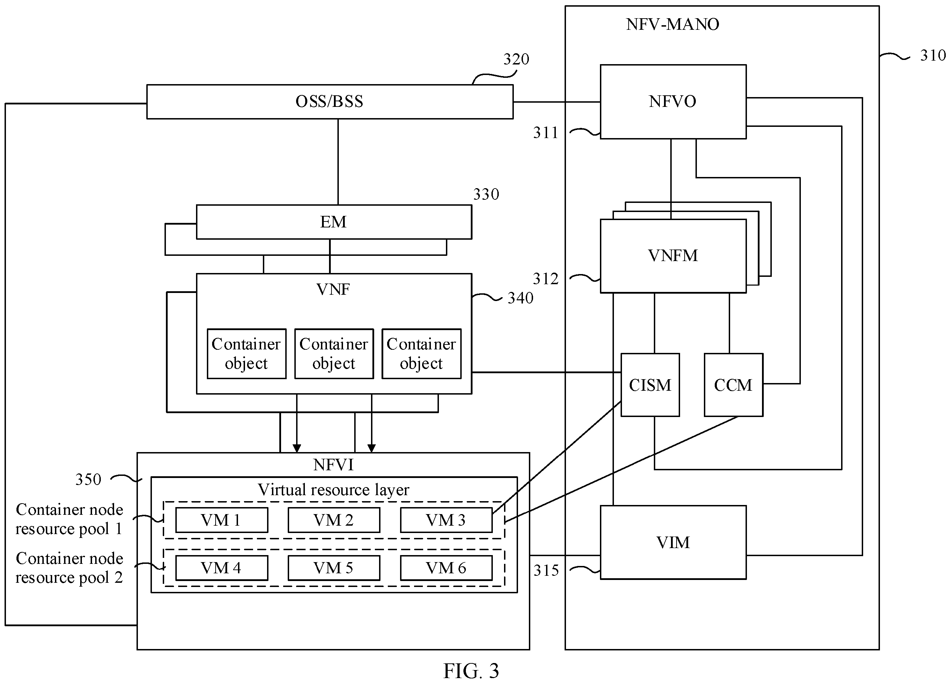

FIG. 3 is a schematic diagram of an NFV architecture. The NFV architecture may be used to implement a plurality of networks, for example, a local area network (local area network, LAN), an internet protocol (internet protocol, IP) network, an evolved packet core (evolved packet core, EPC) network, or the like.

With continuous development of virtualization technologies, the industry proposes to introduce container management into a reference architecture of NFV management and orchestration (management and orchestration, MANO). FIG. 3 is a deployment case in which an NFV MANO system defined by an NFV industry standard group subordinate to the European Telecommunications Standards Institute (european telecommunications standards institute, ETSI) manages a container cluster.

As shown in FIG. 3, the deployment case includes an NFV-MANO 310, one or more operation support systems/business support systems (operation support systems/business support systems, OSSs/BSSs) 320, a plurality of element management systems (element managers, EMs) 330, a plurality of VNFs 340, and an NFV infrastructure (NFV infrastructure, NFVI) 350.

The OSS/BSS 320 is mainly oriented to a telecommunications service operator, and provides comprehensive network management and service operation functions, including network management (for example, fault monitoring and network information collection), charging management, customer service management, and the like.

The EM 330 is configured to perform conventional fault management, configuration management, account management, performance management, and security management (fault management, configuration management, account management, performance management, security management, FCAPS) functions for the VNF.

The VNF 340 corresponds to a physical network function (physical network function, PNF) in a conventional non-virtualised network. For example, the VNF 340 is a virtualised packet core (evolved packet core, EPC) node (for example, a mobility management entity (mobility management entity, MME), a serving gateway (serving gateway, SGW), or a public data network gateway (public data network gateway, PGW)). Functional behavior and a status of a network function are unrelated to whether the network function is virtualized. NFV technical requirements expect that the VNF has same functional behavior and external interfaces as the PNF.

The VNF 340 may include one or more container objects. One container object may be understood as the pod in FIG. 2, and each pod may be deployed in a container cluster node resource pool. A resource in each container cluster node resource pool may be a virtual machine (virtual machine, VM) or a bare metal (bare metal) server. Each VM carries one or more container objects.

The NFVI 350 may include a virtual resource layer. The virtual resource layer may include a plurality of VMs. One or more container cluster node resource pools may include the plurality of VMs. For example, in FIG. 3, a container cluster node resource pool 1 includes VM 1 to VM 3, and a container node resource pool 2 includes VM 4 to VM6.

The NFV-MANO 310 may include an NFV orchestrator (NFV orchestrator, NFVO) 311, one or more VNFMs 312, a container infrastructure service management (container infrastructure service management, CISM) 313, a container cluster management (container cluster management, CCM) 314, and a virtualised infrastructure manager (virtualised infrastructure manager, VIM) 315.

The NFVO is configured to: manage and process a network service descriptor (network service descriptor, NSD) and a virtualised network function forwarding graph (VNF forwarding graph, VNFFG), manage a network service lifecycle, and cooperate with the VNFM to implement lifecycle management of a VNF and a global view function of a virtual resource.

The VNFM implements the VNF lifecycle management, including virtualised network function descriptor (VNF descriptor, VNFD) management, VNF instantiation, VNF instance auto scaling (including scaling out/up (scaling out/up) and scaling in/down (scaling in/down)), VNF instance healing (healing), and VNF instance termination. The VNFM can further receive an auto scaling (scaling) policy delivered by the NFVO, to implement VNF auto scaling.

The VIM is mainly responsible for resource management (including reservation and allocation) in the NFVI, virtual resource status monitoring and fault reporting, and providing a virtual resource pool for an upper-layer application.

The CISM may also be referred to as CaaS management, and is responsible for managing a container object invoked by the VNF, including creation, update, and deletion of the container object, and scheduling, in a container cluster node resource pool managed by the CISM, the container object to a node resource corresponding to a corresponding VM. The node resource includes a computing resource, a storage resource, a network resource, and the like. In the ETSI standard, the container object corresponds to a managed container infrastructure object (managed container infrastructure object, MCIO).

The CCM manages the container cluster, including creating a node resource pool used by the container cluster and expanding or reducing a capacity of the node resource pool. The container cluster is a set of a management node (for example, the Kubernetes Master in FIG. 2) and a series of worker nodes (for example, the nodes in FIG. 2). The container cluster is a dynamic system. A plurality of containers may be deployed in the container cluster. Statuses of these containers and communication between the containers can be monitored by a monitoring and management system. In the ETSI standard, the container cluster corresponds to a container infrastructure service cluster (container infrastructure service cluster, CIS Cluster).

The CISM and CCM provide a management service for the NFVO or VNFM over a northbound interface.

It can be learned from the deployment case shown in FIG. 3 that the container object may be directly invoked by a VNF to generate a container-based VNF. Therefore, from a perspective of the container cluster, a plurality of container-based VNFs are a plurality of tenants of the container cluster, as shown in FIG. 1. In a scenario shown in FIG. 1, different tenants may be deployed in a same container cluster. For example, both a VNF 1 and a VNF 2 need to invoke node resources provided by a container cluster 1, in other words, both the VNF 1 and the VNF 2 need to be deployed in the container cluster 1. Container objects invoked by a same tenant may alternatively be deployed in different container clusters. For example, the VNF 2 needs to separately invoke node resources provided by the container cluster 1 and a container cluster 2. For security of an application in a tenant, container objects invoked by different tenants may need to be isolated. Therefore, when the case shown in FIG. 1 exists, how to manage the plurality of tenants to ensure security of running an application of each tenant is an urgent problem to be resolved currently.

In view of this, embodiments of this application provide a multi-tenancy management method. In the method, after a virtualised network function manager VNFM receives an instantiation request of a VNF that includes a tenant identifier of a container object invoked by the VNF (where a tenant of the container object invoked by the VNF represents the VNF), the VNFM obtains indication information that indicates whether the container object invoked by the VNF and another container object in the VNF are deployed in a same logical spatial scope. Then, the VNFM sends a container object creation request to a container infrastructure service management CISM, and includes an identifier of the container object, the tenant identifier of the container object invoked by the VNF, and the indication information in the creation request. After receiving the creation request, the CISM creates, according to a prestored multi-tenancy management policy and the indication information in the creation request, the container object invoked by the VNF, and sends a VNF instantiation response to the VNFM, to complete an instantiation process of the VNF.

In the foregoing technical solution, the indication information indicates whether deployment locations of the container object invoked by the VNF instance and another container object invoked by the VNF instance are in a same logical spatial scope, so that an isolation requirement for deployment of the VNF instance is met, and security of the VNF instance is ensured. In addition, the logical spatial scope is usually created by an NFVO. In the foregoing solution, the VNFM may request, based on the tenant identifier carried in the instantiation request of the VNF, the CISM to deploy, based on the indication information, the container object in the logical spatial scope managed by the CISM. This can avoid that a VNFM can manage a container object only when the VNFM senses a logical spatial scope in which the container object is deployed.

The deployment case in which the NFV MANO system manages the container cluster and the service scenario that are described in embodiments of this application are intended to describe the technical solutions in embodiments of this application more clearly, and do not constitute a limitation on the technical solutions provided in embodiments of this application. A person of ordinary skill in the art may learn that the technical solutions provided in embodiments of this application are also applicable to a similar technical problem as the network architecture evolves and a new service scenario emerges.

The technical solutions provided in embodiments of this application are described below with reference to the accompanying drawings.

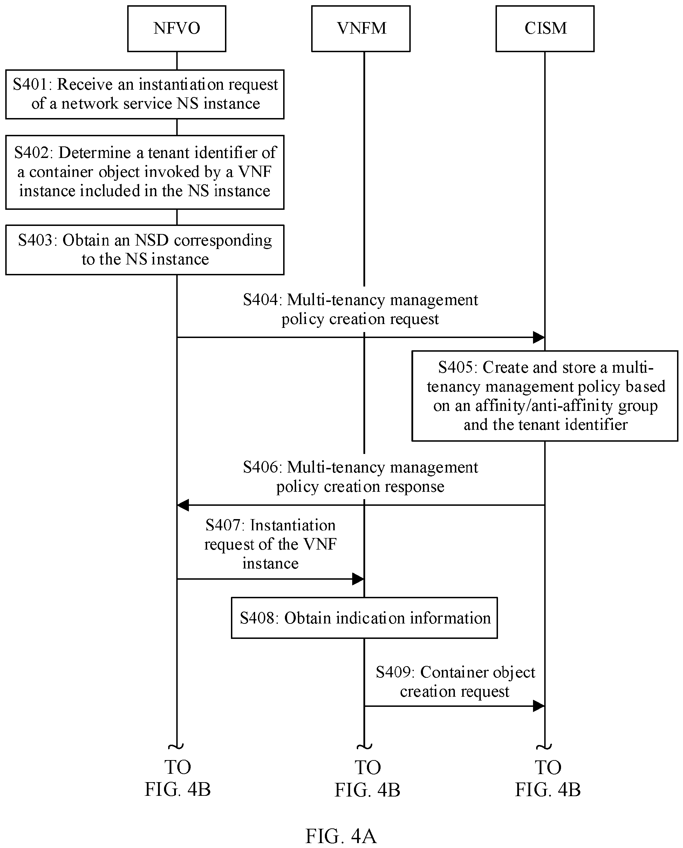

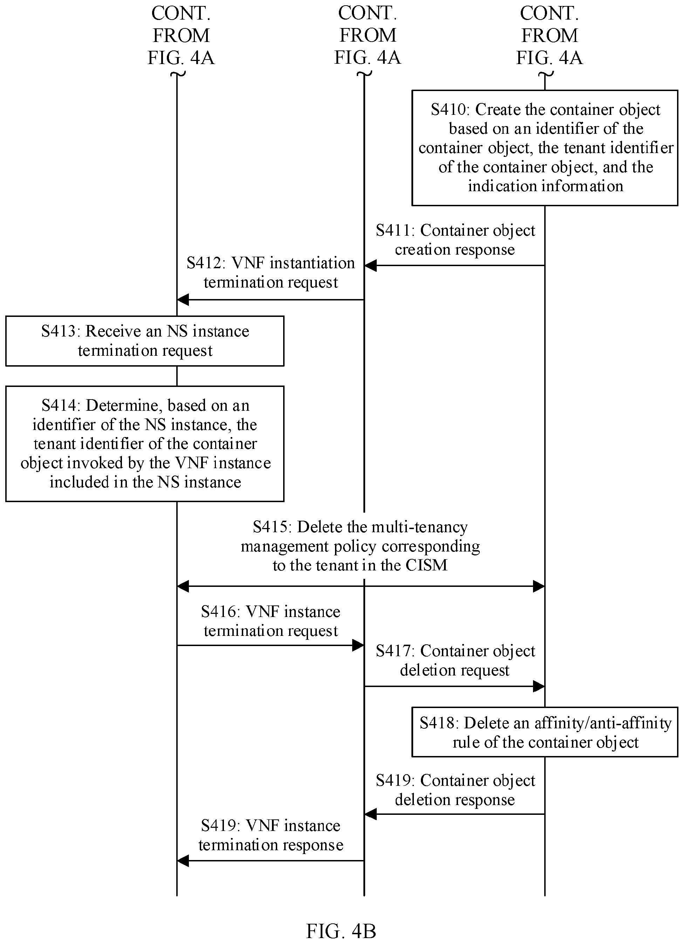

FIG. 4A and FIG. 4B are a flowchart of a multi-tenancy management method according to an embodiment of this application.

In the following description process, an example in which the method is applied to the deployment case in which the NFV MANO system manages the container cluster and that is shown in FIG. 3 is used. In other words, an NFVO, a VNFM, and a CISM in the following may be the NFVO, the VNFM, and the CISM shown in FIG. 3. In addition, the method may be performed by a plurality of communication apparatuses. The plurality of communication apparatuses may be respectively an NFVO, a VNFM, and a CISM, or communication apparatuses that can support the NFVO, the VNFM, and the CISM in implementing functions required by the method, or certainly may be other communication apparatuses, for example, chip systems. Implementations of the plurality of communication apparatuses are not limited herein.

S401: An NFVO receives an instantiation request of a network service NS instance.

In this embodiment of this application, the instantiation request of the NS instance may be initiated by the OSSBSS in the deployment case shown in FIG. 3. An initiator of the instantiation request of the NS instance is not limited herein.

The instantiation request of the NS instance may carry an identifier of the NS instance. After receiving the instantiation request, the NFVO may verify correctness of the instantiation request. For example, whether the identifier of the NS instance carried in the instantiation request is correct may be verified. After the verification succeeds, the NFVO performs an NS instantiation process.

S402: The NFVO determines a tenant identifier of a container object invoked by a VNF instance included in the NS instance.

In this embodiment of this application, a tenant may be understood as a tenant established in spatial scopes of different levels, and the tenant indicates a created VNF instance.

The following describes the spatial scopes of different levels.

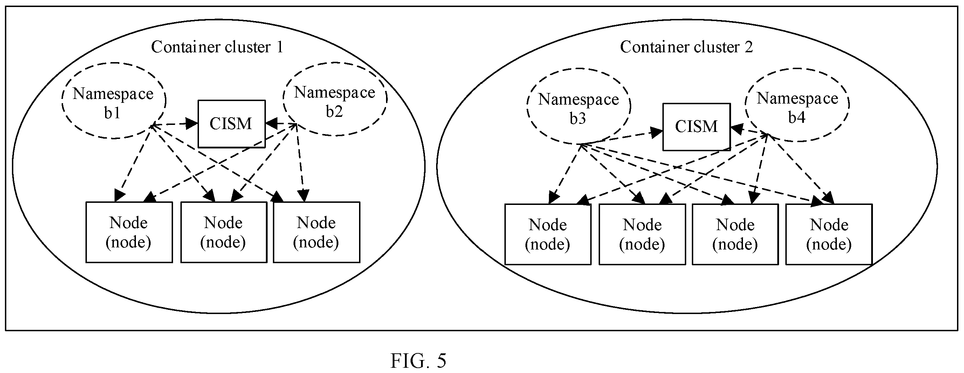

In this embodiment of this application, a spatial scope may include but is not limited to a site (site or NFVI-PoP, also referred to as a data center), a zone (zone), a zone group (zone group), a host (host), a container cluster, and a namespace (namespace). The site, the zone, the zone group, and the host may be referred to as a physical spatial scope, and represent scopes of infrastructure resources at different layers or granularities that are physically separated from each other. The container cluster and a namespace in the container cluster may also be referred to as a logical spatial scope or a virtual spatial scope, and are abstractions of logical objects at different levels or granularities that are performed on a node set that is run by a container application (for example, a container-based VNF). A concept of the container cluster is described in the foregoing descriptions of the CCM. Details are not described herein again. The namespace is a logical group that includes a group of specific identifiers, resources, policies, and authorizations. The logical group may exclusively occupy a subset of node resources in the container cluster. The node resources in the subset are allocated to objects represented by identifiers in the logical group. For example, as shown in FIG. 5, in the deployment case shown in FIG. 3, each container cluster may include a CISM configured to manage the container cluster. The CISM provides management functions such as namespace creation (create), query (read), update (update), and deletion (delete) for the NFVO. In other words, the namespace is created by the NFVO in the container cluster. Usually, a VNFM does not sense the namespace created by the NFVO. The CISM may be deployed on one node in the container cluster. As shown in FIG. 5, a container cluster 1 includes four nodes, and a container cluster 2 includes five nodes. The CISM is deployed on one node in each container cluster. Each node includes a plurality of resources. For example, remaining three nodes in the container cluster 1 each include a computing resource 1 to a computing resource 4, and remaining four nodes in the container cluster 2 each include computing resources 1' to 5'. The NFVO may create two namespaces in the container cluster 1, and identification information of the two namespaces is b1 and b2 respectively. To be specific, the namespace b1 occupies a part of resources of the three nodes in the container cluster 1, for example, occupies the computing resource 1 and the computing resource 2 of each of the remaining three nodes, and the namespace b2 occupies another part of resources of the three nodes in the container cluster 1, for example, occupies the computing resource 3 and the computing resource 4 of each of the remaining three nodes. Node resources occupied by the two namespaces do not overlap. In FIG. 5, a dashed line arrow indicates a node resource occupied by each namespace. The NFVO may create two namespaces in the container cluster 2, and identification information of the two namespaces is b3 and b4 respectively. To be specific, the namespace b3 occupies a part of resources of the remaining four nodes in the container cluster 2, for example, occupies the computing resource 1' to the computing resource 3' of each of the remaining four nodes, and the namespace b4 occupies another part of resources of the remaining four nodes in the container cluster 2, for example, occupies the computing resource 4' and the computing resource 5' of each of the remaining four nodes. Node resources occupied by the two namespaces do not overlap. Certainly, a quantity of namespaces created by the NFVO in each container cluster is not limited in this embodiment of this application.

On the premise of the foregoing spatial scopes of different levels, the tenant may be a tenant in a container cluster, or the tenant may be a tenant in a site across different container clusters, or the tenant may be a tenant in a spatial scope corresponding to a combination of the foregoing plurality of different spatial scopes. A spatial scope used by the tenant is not limited herein. For ease of description, the following uses a tenant in a container cluster as an example for description.

In an example, in this embodiment of this application, the NFVO may interact with the VNFM to obtain the tenant identifier of the container object invoked by the VNF instance included in the NS instance. This may specifically include the following steps.

After receiving the instantiation request of the NS, the NFVO first determines at least one VNF instance included in the NS instance. For example, the NFVO may obtain a network service descriptor (network service descriptor, NSD) file of the NS based on the identifier of the NS carried in the instantiation request of the NS, and determine, based on the NSD, the VNF instance included in the NS. There may be one or more VNF instances included in the NS. This is not limited herein. Then, the NFVO may send, to the VNFM, a VNF instance identifier creation request for creating an identifier of the VNF instance included in the NS. The VNF instance identifier creation request may be for creating identifiers of all VNF instances included in the NS. Alternatively, the NFVO may send one VNF instance identifier creation request for each VNF instance. A quantity of VNF instance identifier creation requests is not limited herein. After receiving the VNF instance identifier creation request, the VNFM creates an identifier of a corresponding VNF instance, and sends a VNF instance identifier creation response to the NFVO. The VNF instance identifier creation response includes the identifier of the VNF instance that is created by the VNFM. After receiving the VNF instance identifier creation response, the NFVO maps the identifier of the VNF instance that is included in the VNF instance identifier creation response to the corresponding tenant identifier of the container object invoked by the VNF instance.

It should be noted that, the VNFM may further include a container object package for describing a template of the container object. In the ETSI NFV standard, the container object package corresponds to a managed container infrastructure object package (managed container infrastructure object package, MCIOP). In this case, after receiving the VNF instance identifier creation request, the VNFM may alternatively obtain an identifier of a container object package corresponding to the container object invoked by the VNF instance, and then include the identifier of the container object package in the VNF instance identifier creation response, and send the VNF instance identifier creation response to the NFVO. The NFVO may map the identifier of the container object package to the corresponding tenant identifier of the container object invoked by the VNF instance.

Certainly, the NFVO may alternatively obtain, in other manners, the tenant identifier of the container object invoked by the VNF instance included in the NS instance. The other manners are not described one by one herein.

S403: The NFVO obtains the NSD corresponding to the NS instance.

The NFVO may obtain, based on the identifier of the NS instance, the NSD corresponding to the NS instance. In this embodiment of this application, the NSD includes an affinity/anti-affinity group between VNF instances included in the NS instance. The following describes the affinity/anti-affinity group.

The affinity/anti-affinity group is obtained according to an affinity/anti-affinity rule. The affinity/anti-affinity rule is a deployment policy in an NFV technology, and is for restricting a deployment requirement that locations of to-be-deployed virtualised function objects are close to or far away from each other when the to-be-deployed virtualised function objects are mapped to actual physical resources. A virtualised function object may include one or more VNF components (VNF components, VNFCs) that are included in the VNF instance, one or more virtual links (virtual links, VLs) for connecting VNF instances, or the like.

For example, for a VNFC, a virtualised computing resource affinity rule of the VNFC specifies that two or more VNFCs in one affinity group need to be deployed on a same computing node, and a virtualised computing resource anti-affinity rule of the VNFC specifies that two or more VNFCs in one anti-affinity group need to be deployed on different computing nodes. For a virtual link VL, a virtualised network resource affinity rule of the VL specifies that two or more VLs in one affinity group need to be deployed on a same physical network connection, and a virtualised network resource anti-affinity rule of the VL specifies that two or more VLs in one anti-affinity group need to be deployed on different physical network connections. The affinity/anti-affinity rule may alternatively be understood as an affinity/anti-affinity rule within an application scope. The application scope may include but is not limited to a slot (slot), a rack (rack), a shelf (shelf), a host (host), a zone (zone), a zone group (zone group), a site (site or NFVI-PoP), and the like. For example, if the affinity/anti-affinity rule is a rule within a slot scope, the virtualised computing resource affinity rule of the VNFC may specify that two or more VNFCs in one affinity group need to be deployed on computing nodes in a same slot. Alternatively, if the affinity/anti-affinity rule is a rule within a zone scope, the virtualised computing resource affinity rule of the VNFC may specify that two or more VNFCs in one affinity group need to be deployed on computing nodes in a same zone. When the application scope is another case, for understanding of the affinity/anti-affinity rule, refer to the foregoing descriptions of the case in which the application scope is the slot or the zone. Examples are not described herein one by one.

In this embodiment of this application, the application scope of the affinity/anti-affinity rule is extended. Details are as follows.

In the foregoing descriptions of the affinity/anti-affinity rule, the application scope of the affinity/anti-affinity rule includes physical spatial scopes such as a slot and a rack. However, in this embodiment of this application, the application scope corresponding to the affinity/anti-affinity rule includes the physical spatial scope, and further includes but is not limited to a spatial scope (or referred to as a logical spatial scope) of a container cluster and/or a namespace in the container cluster. The physical spatial scope and the logical spatial scope are together for determining a location at which the container object invoked by the VNF instance is to be deployed. Because the application scope of the affinity/anti-affinity rule in this embodiment of this application includes the logical spatial scope, it can be ensured that the container object invoked by the VNF instance may be deployed in a same container cluster or different container clusters, or deployed in a same namespace or different namespaces according to the affinity/anti-affinity rule.

It should be noted that a spatial scope indicated in the affinity/anti-affinity rule may be understood as a type of the indicated spatial scope. For example, the spatial scope may be classified into two types: a container cluster and a namespace in the container cluster. In this case, the affinity/anti-affinity rule may be used only to indicate whether the container object invoked by the VNF instance and another container object of the tenant are deployed in a same type of spatial scope, for example, deployed in a same container cluster, or deployed in a same namespace. However, there may be a plurality of spatial scopes of a same type. For example, there are a plurality of container clusters, which are respectively marked as a container cluster 1 to a container cluster 3. If the affinity/anti-affinity rule indicates that the container object invoked by the VNF instance and the another container object of the tenant are deployed in a same container cluster, a specific container cluster in which the container object invoked by the VNF instance is deployed and that is of the container cluster 1 to the container cluster 3 cannot be indicated by the affinity/anti-affinity rule. The specific container cluster in which the container object invoked by the VNF instance is deployed may be determined by the CISM according to a preset rule. Details are not described herein.

In an example, in this embodiment of this application, "scope (scope)" attributes in affinity/anti-affinity rules that are in a VNF configuration file (VNF profile) and a virtual link configuration file (virtual link profile) in an NSD information model defined in the ETSI NFV standard and that are in a VDU configuration file (VDU profile) and a virtual link configuration file (virtual link profile) in a VNFD information model are separately extended. For example, a "scope (scope)" attribute of a local affinity/anti-affinity rule (local affinity or anti-affinity rule) information unit, a "scope (scope)" attribute of an affinity/anti-affinity group (affinity or anti-affinity group) information unit, and the like may be extended. This not limited herein. For example, in the "scope (scope)" attribute, the application scope of the affinity/anti-affinity rule may be indicated by enumeration. The application scope includes a site (NFVI-PoP), a zone (zone), a zone group (zone group), a node (node), a container cluster, a namespace, and the like.

It can be learned from the foregoing content that, a container cluster and a namespace are added to the application scope of the affinity/anti-affinity rule, to indicate that all container objects in one affinity group may be deployed in a same container cluster or deployed in a same namespace. Alternatively, this may indicate that all container objects in one anti-affinity group may be deployed in different container clusters or deployed in different namespaces. It should be noted that, the anti-affinity group may be defined based on both a physical spatial scope and a logical spatial scope. For example, if an application scope of one anti-affinity group is a namespace, it may be understood that all container objects in the anti-affinity group are deployed in different namespaces in a same container cluster of a same site, or it may be understood that all container objects in the anti-affinity group are deployed in different namespaces in different container clusters of a same site.

It should be noted that an execution sequence of step S402 and step S403 is not limited in this embodiment of this application. To be specific, step S402 may be performed before step S403, or step S403 may be performed before step S402, or step S402 and step S403 may be simultaneously performed. In FIG. 4A and FIG. 4B, an example in which step S402 is performed before step S403 is used for description.

S404: The NFVO sends a multi-tenancy management policy creation request to the CISM, and the CISM receives the multi-tenancy management policy creation request.

After obtaining the tenant identifier of the container object invoked by the VNF instance included in the NS and the affinity/anti-affinity group between the VNF instances included in the NS, the NFVO sends the multi-tenancy management policy creation request to the CISM. The creation request includes the affinity/anti-affinity group and the tenant identifier.

S405: The CISM creates and stores a multi-tenancy management policy based on the affinity/anti-affinity group and the tenant identifier.

In this embodiment of this application, the multi-tenancy management policy indicates whether container objects separately invoked by the tenant and another tenant are deployed in a same spatial scope, and both the tenant and the another tenant are tenants of container objects invoked by the VNF instances included in the NS instance. For example, the NS instance includes three VNF instances, which are respectively marked as a VNF instance 1 to a VNF instance 3. Tenant identifiers of container objects invoked by the VNF instance 1 to the VNF instance 3 are respectively a tenant 1 to a tenant 3. In this case, the CISM may create a corresponding multi-tenancy management policy for each tenant. A multi-tenancy management policy corresponding to the tenant 1 indicates whether container objects separately invoked by the tenant 1, the tenant 2, and the tenant 3 are deployed in a same spatial scope. A multi-tenancy management policy corresponding to the tenant 2 indicates whether container objects separately invoked by the tenant 2, the tenant 1, and the tenant 3 are deployed in a same spatial scope. The rest can be deduced by analogy.

In an example, the multi-tenancy management policy includes the tenant identifier of the container object, an identifier of an affinity/anti-affinity group in which a container object included in the tenant is located, an affinity/anti-affinity type, and an application scope of the affinity/anti-affinity group. The rule type includes affinity or anti-affinity, and the application scope of the rule may include any one or a combination of the foregoing physical spatial scopes and logical spatial scopes. Specifically, the CISM may bind the obtained affinity/anti-affinity group and the tenant identifier together, to generate the multi-tenancy management policy of the container object invoked by the tenant, and store the multi-tenancy management policy in the CISM. The multi-tenancy management policy may be represented as {tenant identifier (marked as tenantID), affinity/anti-affinity group identifier (marked as groupID), rule type, application scope of rule}. For example, an example of a multi-tenancy management policy created by the CISM is {tenant 1, affinity group 1, affinity, namespace 1}, and indicates that a container object invoked by the tenant 1 is deployed in an affinity group 1, and all members in the affinity group are in a same namespace.

It should be noted that a specific form of the multi-tenancy management policy created by the CISM is not limited herein.

At this point, the NFVO has created the multi-tenancy management policy for a plurality of tenants in the CISM. In this way, after the NFVO subsequently sends, to the VNFM, an instantiation request for instantiating the VNF instance included in the NS, the required VNF instance may be created according to the multi-tenancy management policy.

S406: The CISM sends a multi-tenancy management policy creation response to the NFVO, and the NFVO receives the multi-tenancy management policy creation response.

S407: The NFVO sends the instantiation request of the VNF instance to the VNFM, and the VNFM receives the instantiation request.

In this embodiment of this application, the instantiation request includes the tenant identifier of the container object invoked by the VNF, namely, the identifier of the VNF instance. It should be noted that, if the NS includes a plurality of VNF instances, the NFVO needs to respectively send instantiation requests for the plurality of VNF instances. For ease of description, the following uses one instantiation request sent by the NFVO as an example. Processing for other VNF instances is similar to the following process. Details are not described herein.

S408: The VNFM obtains indication information.

In this embodiment of this application, the indication information indicates whether the container object invoked by the VNF and another container object in a same tenant (namely, the VNF instance) in which the container object is located are deployed in a same logical spatial scope. In an example, the indication information may be understood as an affinity/anti-affinity rule of the container object. In this case, after receiving the instantiation request of the VNF instance, the VNFM may obtain, based on the identifier of the VNF instance, a virtualised network function descriptor file VNFD corresponding to the VNF instance, and obtain the affinity/anti-affinity rule from the VNFD. In an example, the affinity/anti-affinity rule includes an affinity/anti-affinity rule type (for example, affinity or anti-affinity) of the container object invoked by the VNF instance, an identifier of an affinity/anti-affinity group in which the container object corresponding to the affinity/anti-affinity rule is located, and an application scope of the affinity/anti-affinity group. The application scope includes the foregoing spatial scopes. For example, the affinity/anti-affinity rule may be represented as {affinity/anti-affinity group identifier, rule type, application scope of rule}. Alternatively, the affinity/anti-affinity rule may further include an identifier of the container object. For example, the affinity/anti-affinity rule may be represented as {container object identifier, affinity/anti-affinity group identifier, rule type, application scope of rule}. For each piece of information included in the affinity/anti-affinity rule, refer to the foregoing content. Details are not described herein again.

S409: The VNFM sends a container object creation request to the CISM, and the CISM receives the container object creation request.

In this embodiment of this application, the creation request includes the identifier of the created container object, the tenant identifier (namely, the identifier of the VNF instance) of the container object, and the indication information (namely, the affinity/anti-affinity rule of the container object). It should be noted that, if the VNF invokes a plurality of container objects, the VNFM may send a plurality of container object creation requests to the CISM, to create the plurality of container objects, or the VNFM may send only one container object creation request, and include identifiers of the plurality of container objects in the creation request. A manner in which the VNFM sends the container object creation request is not limited herein.

S410: The CISM creates the container object based on the identifier of the container object, the tenant identifier of the container object, and the indication information.

In this embodiment of this application, a manner of creating the container object by the CISM may include but is not limited to the following two manners.

In a first manner, the CISM creates the container object only based on the identifier of the container object, the tenant identifier of the container object, and the indication information.

In an example, after receiving the container object creation request, the CISM determines, according to the affinity/anti-affinity rule of the container object in the creation request, a location of a container cluster and/or a namespace in the container cluster in which the container object is deployed, and then creates the container object at the determined location. Specifically, the CISM first determines that a deployment location of the another container object of the tenant in which the container object is located is, for example, a first spatial scope. The first spatial scope may be any one of the foregoing spatial scopes, for example, a container cluster or a namespace. If the indication information indicates that the container object and the another container object in the same tenant in which the container object is located are deployed in a same spatial scope, the CISM creates the container object in the first spatial scope. If the indication information indicates that the container object and the another container object in the same tenant in which the container object is located are not deployed in a same spatial scope, the CISM selects, from other spatial scopes, a second spatial scope different from the first spatial scope, to create the container object in the second spatial scope.

For example, if the CISM determines, based on the indication information, that the container object invoked by the VNF instance and the another container object invoked by the VNF instance are deployed in a same namespace in a same container cluster, the CISM may determine, based on availability statuses of resources in a plurality of namespaces managed by the CISM, a specific namespace in which the container object invoked by the VNF instance is deployed. For example, the container object invoked by the VNF instance includes container objects c1 to c3. If the indication information indicates that the container object c1 and another container object (namely, the container object c2 and the container object c3) of the VNF instance are deployed in a same spatial scope, and the another container object c2 invoked by the VNF instance has been deployed in a namespace whose identification information is b1, or another member, the container object c3, in an affinity group of the container object c1 invoked by the VNF instance has been deployed in a namespace whose identification information is b1, and the namespace has robust resources to carry running of the container object c1, the CISM also deploys the container object c1 in the namespace whose identification information is b1. If the indication information indicates that the container object c1 and another container object of the VNF instance are deployed in different spatial scopes, and the another container object c2 invoked by the VNF instance has been deployed in a namespace whose identification information is b1, or another member, the container object c3, in an affinity group of the container object c1 invoked by the VNF instance has been deployed in a namespace whose identification information is b1, the CISM determines that the container object c1 needs to be deployed in another namespace, for example, deployed in a namespace whose identification information is b2. Certainly, the CISM may alternatively determine, according to another algorithm, a specific namespace in which the container object invoked by the VNF instance is deployed. This is not limited herein.

In a second manner, the CISM creates the container object based on the identifier of the container object, the tenant identifier of the container object, a pre-stored multi-tenancy management policy, and the indication information.

In an example, after determining, according to the affinity/anti-affinity rule of the container object in the creation request, a location of a container cluster and/or a namespace in the container cluster in which the container object is deployed, the CISM may further determine or adjust, according to the multi-tenancy management policy stored in step S405, the location of the container cluster and/or the namespace in the container cluster in which the container object is deployed. This prevents the tenant that invokes the container object from using a container cluster or namespace used by another tenant that does not match the affinity/anti-affinity rule of the container object.

Specifically, the CISM first determines that a deployment location of the another container object of the tenant in which the container object is located is, for example, a third spatial scope. Then, it is determined whether the third spatial scope meets the multi-tenancy management policy. If the third spatial scope meets the multi-tenancy management policy, and the indication information indicates that the container object and the another container object in the same tenant in which the container object is located are deployed in a same spatial scope, the CISM creates the container object in the third spatial scope. If the indication information indicates that the container object and the another container object in the same tenant in which the container object is located are not deployed in a same spatial scope, the CISM determines, from other spatial scopes, a fourth spatial scope that meets the multi-tenancy management policy, and creates the container object in the fourth spatial scope.

It should be noted that determining whether a spatial scope meets the multi-tenancy management policy may be understood as follows. If the multi-tenancy management policy indicates that container objects of the tenant in which the container object is located and another tenant cannot be deployed in a same spatial scope, whether a spatial scope meets the multi-tenancy management policy is determined, in other words, whether a container object of another tenant is created in the spatial scope is determined. If no container object of another tenant is created in the spatial scope, the spatial scope meets the multi-tenancy management policy. Otherwise, it is determined that the spatial scope does not meet the multi-tenancy management policy.

For example, the CISM determines, based on the indication information, that the container object invoked by the VNF instance and the another container object invoked by the VNF instance are deployed in a same namespace in a same container cluster, and determines, based on availability statuses of resources in a plurality of namespaces managed by the CISM, to deploy the container object invoked by the VNF instance in a namespace whose identification information is b 1. Then, the CISM determines that a container object of another VNF instance is further deployed in the namespace whose identification information is b1. Because the multi-tenancy management policy stored in the CISM indicates that the VNF instance and another VNF instance cannot use a same namespace, the CISM re-adjusts the deployment location of the container object invoked by the VNF instance. For example, the container object invoked by the VNF instance may be deployed in a namespace whose identifier is b2.

S411: The CISM sends a container object creation response to the VNFM, and the VNFM receives the container object creation response.

S412: The VNFM sends a VNF instantiation response to the NFVO, and the NFVO receives the VNF instantiation response.

After the CISM successfully creates the container object invoked by the VNF instance, the VNFM sends, to the NFVO, a response message indicating that the VNF instantiation is successfully created.

After confirming that instantiation of all VNFs included in the NS is completed, the NFVO confirms that instantiation of the NS is completed.

In the foregoing technical solution, the affinity/anti-affinity rule of the container object directly indicates whether the container object invoked by the VNF instance and the another container object of the VNF instance are deployed in a same spatial scope (a same container cluster or a same namespace), so that an isolation requirement for deployment of the VNF instance can be met, and security of the VNF instance is ensured. In addition, the VNFM requests, based on the tenant identifier carried in the instantiation request of the VNF, the CISM to deploy, based on the indication information, the container object in the spatial scope managed by the CISM, so that the VNFM does not need to sense the spatial scope. This can avoid that a VNFM can manage a container object only when the VNFM senses a spatial scope in which the container object is deployed.

Because resources at an infrastructure layer are limited, to properly use the resources, an NS instance may be deleted after the NS instance is not used for a long time or it is determined that the NS instance is no longer used. Specifically, the following steps may be included.

S413: The NFVO receives an NS instance termination request.

The termination request includes the identifier of the NS instance. The termination request may be sent by the OSSBSS, or certainly may be sent by another device. This is not limited herein.

S414: The NFVO determines, based on the identifier of the NS instance, the tenant identifier of the container object invoked by the VNF instance included in the NS instance.

Specifically, after performing step S402 to obtain the tenant (namely, the VNF instance) identifier of the container object invoked by the VNF instance included in the NS, the NFVO may store the tenant identifier in the NFVO, and create a mapping relationship between the identifier of the NS instance and the tenant identifier, so that the NFVO may obtain, based on the mapping relationship stored in the NFVO, the identifier of the tenant corresponding to the NS instance that needs to be terminated. Certainly, the tenant identifier may be obtained in another manner. This is not limited herein.

S415: The NFVO deletes the multi-tenancy management policy corresponding to the tenant from the CISM.

Specifically, the NFVO may first send a multi-tenancy management policy deletion request to the CISM. The deletion request includes the tenant identifier. After receiving the deletion request, the CISM deletes the multi-tenancy management policy related to the identifier of the tenant (namely, the VNF instance), and sends a multi-tenancy management policy deletion response to the NFVO.

S416: The NFVO sends a VNF instance termination request to the VNFM, and the VNFM receives the VNF instance termination request.

The VNF instance termination request includes the identifier of the VNF instance.

S417: The VNFM sends a container object deletion request to the CISM, and the CISM receives the container object deletion request.

The deletion request includes the identifier of the container object invoked by the VNF instance.

S418: The CISM deletes the affinity/anti-affinity rule of the container object.

S419: The CISM sends a container object deletion response to the VNFM.

S420: The VNFM sends a VNF instance termination response to the NFVO, and the NFVO receives the VNF instance termination response.

After determining that the CISM successfully deletes all the container objects invoked by the VNF instance, the VNFM sends a VNF termination response to the NFVO.

After receiving termination responses for all VNFs included in the NS instance, the NFVO determines that termination of the NS is completed.

In the embodiment shown in FIG. 4A and FIG. 4B, the affinity/anti-affinity rule of the container object indicates whether the container object invoked by the VNF instance and the another container object of the VNF instance are deployed in a same container cluster or a same namespace, to implement multi-tenancy management in the container cluster. In another embodiment, alternatively, other information may indicate whether a container object invoked by a VNF instance and another container object of the VNF instance are deployed in a same container cluster or a same namespace. For example, the foregoing multi-tenancy management may be performed by using placement constraint (placement constraint) information in a VNF lifecycle management grant operation. The following describes the embodiment in which the foregoing multi-tenancy management is performed by using the placement constraint information in the VNF lifecycle management grant operation.

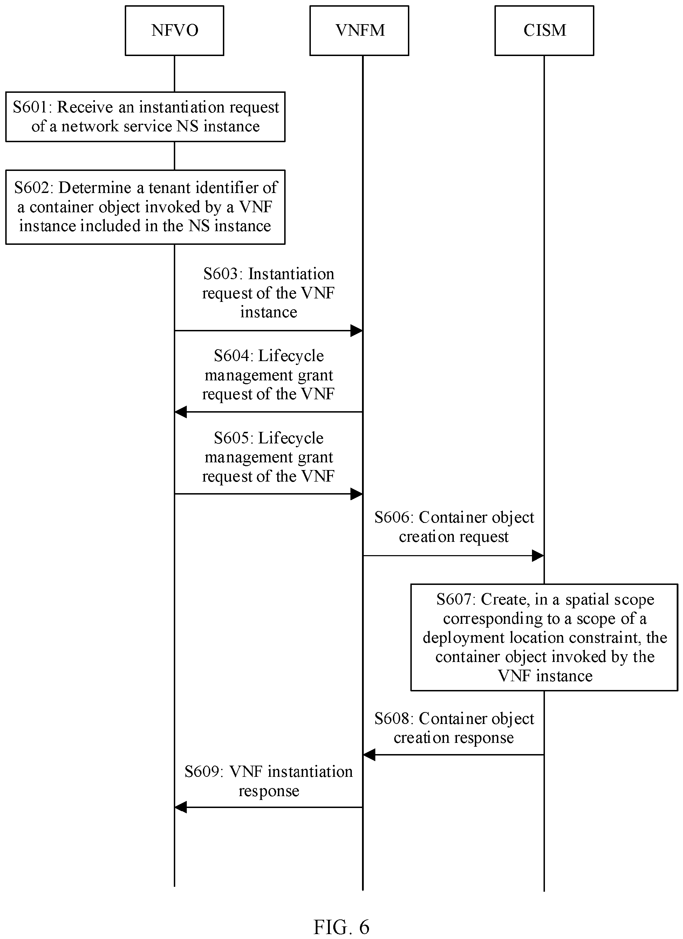

FIG. 6 is a flowchart of another example of a multi-tenancy management method according to an embodiment of this application. The flowchart is described as follows.

S601: An NFVO receives an instantiation request of a network service NS instance.

S602: The NFVO determines a tenant (namely, a VNF instance) identifier of a container object invoked by the VNF instance included in the NS instance.

Step S601 and step S602 are similar to step S401 and step S402. Details are not described herein again.

S603: The NFVO sends the instantiation request of the VNF instance to the VNFM, and the VNFM receives the instantiation request.

The instantiation request includes the tenant identifier of the container object invoked by the VNF instance.

Step S603 is similar to step S406. Details are not described herein again.

S604: The VNFM sends a lifecycle management grant request of the VNF to the NFVO, and the NFVO receives the lifecycle management grant request.

In this embodiment of this application, the lifecycle management grant request includes a deployment location constraint of the VNF.

It should be noted that, in this embodiment of this application, a "scope" attribute of the deployment location constraint is extended. Details are as follows.

A scope of the deployment location constraint includes the physical spatial scopes such as the slot and the rack in the embodiment shown in FIG. 4A and FIG. 4B, and further includes but is not limited to a spatial scope of a container cluster and/or a namespace in the container cluster (or the container cluster and/or the namespace in the container cluster may be referred to as a logical spatial scope). The physical spatial scope and the logical spatial scope are together for determining a location at which the container object invoked by the VNF instance is to be deployed. In this way, the deployment location constraint information is used to ensure that container objects invoked by the VNF instance can be deployed in a same container cluster or different container clusters, or deployed in a same namespace or different namespaces.

In an example, in this embodiment of this application, a "deployment location constraint" information unit and a "constraint resource reference" (constraint resource reference) information unit in a VNF lifecycle management grant operation defined in the ETSI NFV standard are extended. For example, in a "scope (scope)" attribute of the "deployment location constraint" information unit, a deployment location constraint scope of the VNF instance is indicated by enumeration, including a site, a zone, a zone group, a node, a container cluster, a namespace, and the like. A new attribute, for example, a "cismConnectionId" attribute, is added to the "constraint resource reference" information unit, and a CISM connection identifier is pointed to by using the attribute.

Therefore, in this embodiment of this application, the deployment location constraint of the VNF instance included in the lifecycle management grant request may be represented as {deployment location constraint type, application scope of deployment location constraint, identifier of container object invoked by VNF instance}. The deployment location constraint type may include an affinity type or an anti-affinity type. The application scope of the deployment location constraint includes but is not limited to the foregoing spatial scope of a container cluster and/or a namespace in the container cluster. The identifier of the container object invoked by the VNF instance may include {container object 1, container object 2, ..., container object n}. Certainly, the deployment location constraint may alternatively be represented in another form. This is not limited herein.

S605: The NFVO sends a lifecycle management grant response to the VNFM, and the VNFM receives the lifecycle management grant response.

In this embodiment of this application, the lifecycle management grant response includes a scope of the deployment location constraint allowed by the NFVO to be used by the VNFM in the lifecycle management operation. For example, the scope of the deployment location constraint may be the same as the application scope of the deployment location constraint that is carried in the lifecycle management grant request in step S504, or the NFVO may reset the scope of the deployment location constraint according to another policy. The reset scope of the deployment location constraint may include but is not limited to a spatial scope of a container cluster and/or a namespace in the container cluster. For example, if the scope of the deployment location constraint allowed by the NFVO to be used by the VNFM in the lifecycle management operation is a container cluster or a namespace in the container cluster, identification information of the container cluster or the namespace may be carried in the lifecycle management grant response. For example, the scope of the deployment location constraint allowed by the NFVO to be used by the VNFM in the lifecycle management operation is a container cluster whose identification information is a1 or a namespace whose identification information is b 1. It should be noted that, in this case, the scope of the deployment location constraint allowed by the NFVO is a target spatial scope determined based on the identification information.

In this case, the scope of the deployment location constraint allowed by the NFVO may indicate whether the container object invoked by the VNF and another container object in the same tenant in which the container object is located are deployed in a same spatial scope. In other words, the VNFM obtains indication information from the lifecycle management grant response.

S606: The VNFM sends a container object creation request to the CISM, and the CISM receives the container object creation request.

In this embodiment of this application, the creation request includes the scope of the deployment location constraint allowed by the NFVO, an identifier of a created container object, and a tenant identifier of the container object.

S607: The CISM creates, in a spatial scope corresponding to the scope of the deployment location constraint, the container object invoked by the VNF instance.

Specifically, the CISM creates the container object in a second spatial scope corresponding to an identifier of the spatial scope indicated by the deployment location constraint.

For example, if the scope of the deployment location constraint is a namespace whose identification information is b2, the CISM may deploy the container object invoked by the VNF instance in the namespace whose identification information is b2.

It should be noted that, in this embodiment of this application, the NFVO may alternatively create a multi-tenancy management policy in the CISM by using step S402 to step S405 in FIG. 4A and FIG. 4B. In this case, if a multi-tenancy management policy is pre-stored in the CISM, the CISM may alternatively create the container object according to the pre-stored multi-tenancy management policy and the deployment location constraint.

For example, the CISM determines whether the second spatial scope corresponding to the identifier of the spatial scope indicated by the deployment location constraint meets the multi-tenancy management policy. If the second spatial scope meets the multi-tenancy management policy, the container object is created in the second spatial scope. If the second spatial scope does not meet the multi-tenancy management policy, the container object cannot be created in the second spatial scope. The determining whether the second spatial scope meets the multi-tenancy management policy is similar to corresponding content in step S410. Details are not described herein again.

S608: The CISM sends a container object creation response to the VNFM, and the VNFM receives the container object creation response.

S609: The VNFM sends a VNF instantiation response to the NFVO, and the NFVO receives the VNF instantiation response.

Step S608 and step S609 are similar to step S411 and step S412. Details are not described herein again.

In the foregoing embodiments provided in this application, the method provided in embodiments of this application is separately described from perspectives of the NFVO, the CISM, the VNFM, and interaction between the NFVO, the CISM, and the VNFM. To implement functions of the VNFM in the method provided in embodiments of this application, the VNFM may include a hardware structure and/or a software module, to implement the foregoing functions by using the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

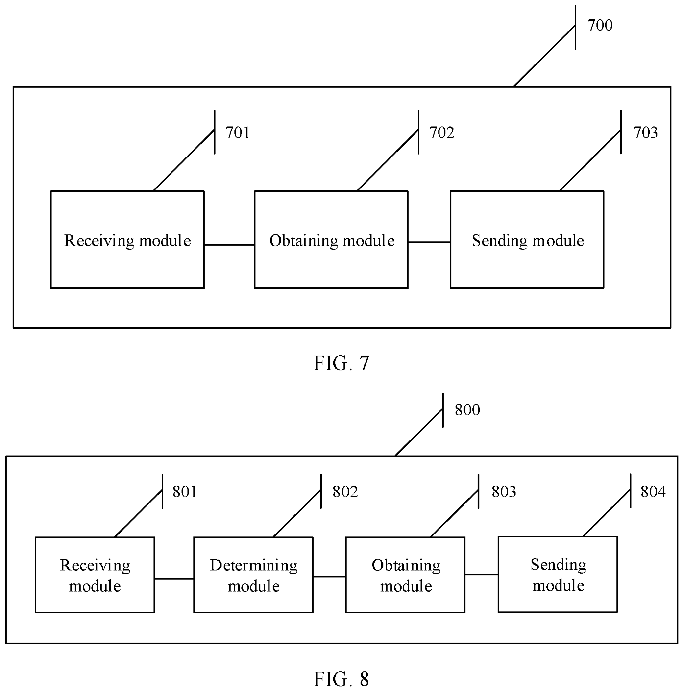

FIG. 7 is a schematic diagram of a structure of a multi-tenancy management apparatus 700. The apparatus 700 may be a VNFM, and can implement the function of the VNFM in the method provided in embodiments of this application. The apparatus 700 may alternatively be an apparatus that can support the VNFM in implementing the function of the VNFM in the method provided in embodiments of this application. The apparatus 700 may be a hardware structure, a software module, or a combination of a hardware structure and a software module. The apparatus 700 may be implemented by a chip system. In this embodiment of this application, the chip system may include a chip, or may include a chip and another discrete component.

The apparatus 700 may include a receiving module 701, an obtaining module 702, and a sending module 703.

The receiving module 701 may be configured to perform step S407, step S411, step S416, and step S419 in the embodiment shown in FIG. 4A and FIG. 4B, or may be configured to perform step S603, step S605, and step S608 in the embodiment shown in FIG. 6, and/or may be configured to support another process of the technology described in this specification.

The obtaining module 702 may be configured to perform step S408 in the embodiment shown in FIG. 4A and FIG. 4B, and/or configured to support another process of the technology described in this specification.

The sending module 703 may be configured to perform step S409, step S417, and step S420 in the embodiment shown in FIG. 4A and FIG. 4B, or may be configured to perform step S604, step S606, and step S609 in the embodiment shown in FIG. 6, and/or may be configured to support another process of the technology described in this specification.

The receiving module 701 and the sending module 703 are configured to perform communication between the apparatus 700 and another module. The another module may be a circuit, a component, an interface, a bus, a software module, a transceiver, or any other apparatus that can implement communication.

All related content of the steps in the foregoing method embodiments may be cited in function descriptions of the corresponding functional modules. Details are not described herein again.

FIG. 8 is a schematic diagram of a structure of a multi-tenancy management apparatus 800. The apparatus 800 may be an NFVO, and can implement the function of the NFVO in the method provided in embodiments of this application. The apparatus 800 may alternatively be an apparatus that can support the NFVO in implementing the function of the NFVO in the method provided in embodiments of this application. The apparatus 800 may be a hardware structure, a software module, or a combination of a hardware structure and a software module. The apparatus 800 may be implemented by a chip system. In this embodiment of this application, the chip system may include a chip, or may include a chip and another discrete component.

The apparatus 800 may include a receiving module 801, a determining module 802, an obtaining module 803, and a sending module 804.

The receiving module 801 may be configured to perform step S401, step S406, step S412, step S413, step S415, and step S420 in the embodiment shown in FIG. 4A and FIG. 4B, or may be configured to perform step S601, step S604, and step S609 in the embodiment shown in FIG. 6, and/or may be configured to support another process of the technology described in this specification.

The determining module 802 may be configured to perform step S402 and step S414 in the embodiment shown in FIG. 4A and FIG. 4B, or may be configured to perform step S602 in the embodiment shown in FIG. 6, and/or may be configured to support another process of the technology described in this specification.

The obtaining module 803 may be configured to perform step S403 in the embodiment shown in FIG. 4A and FIG. 4B, and/or configured to support another process of the technology described in this specification.

The sending module 804 may be configured to perform step S404, step S407, step S415, and step S416 in the embodiment shown in FIG. 4A and FIG. 4B, or may be configured to perform step S603 and step S605 in the embodiment shown in FIG. 6, and/or may be configured to support another process of the technology described in this specification.

The receiving module 801 and the sending module 804 are configured to perform communication between the apparatus 800 and another module. The another module may be a circuit, a component, an interface, a bus, a software module, a transceiver, or any other apparatus that can implement communication.

All related content of the steps in the foregoing method embodiments may be cited in function descriptions of the corresponding functional modules. Details are not described herein again.

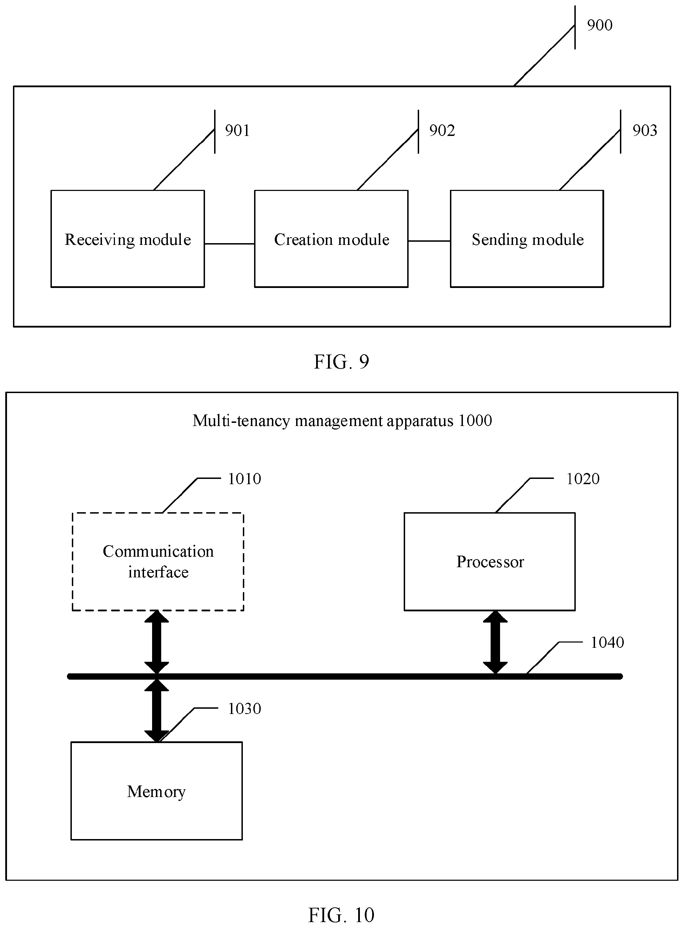

FIG. 9 is a schematic diagram of a structure of a multi-tenancy management apparatus 900. The apparatus 900 may be a CISM, and can implement the function of the CISM in the method provided in embodiments of this application. The apparatus 900 may alternatively be an apparatus that can support the CISM in implementing the function of the CISM in the method provided in embodiments of this application. The apparatus 900 may be a hardware structure, a software module, or a combination of a hardware structure and a software module. The apparatus 900 may be implemented by a chip system. In this embodiment of this application, the chip system may include a chip, or may include a chip and another discrete component.

The apparatus 900 may include a receiving module 901, a creation module 902, and a sending module 903.

The receiving module 901 may be configured to perform step S404, step S409, step S415, and step S417 in the embodiment shown in FIG. 4A and FIG. 4B, or may be configured to perform step S606 in the embodiment shown in FIG. 6, and/or may be configured to support another process of the technology described in this specification.

The creation module 902 may be configured to perform step S405, step S410, and step S418 in the embodiment shown in FIG. 4A and FIG. 4B, or may be configured to perform step S607 in the embodiment shown in FIG. 6, and/or may be configured to support another process of the technology described in this specification.

The sending module 903 may be configured to perform step S406, step S411, step S415, and step S419 in the embodiment shown in FIG. 4A and FIG. 4B, or may be configured to perform step S608 in the embodiment shown in FIG. 6, and/or may be configured to support another process of the technology described in this specification.

The receiving module 901 and the sending module 903 are configured to perform communication between the apparatus 900 and another module. The another module may be a circuit, a component, an interface, a bus, a software module, a transceiver, or any other apparatus that can implement communication.

All related content of the steps in the foregoing method embodiments may be cited in function descriptions of the corresponding functional modules. Details are not described herein again.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

FIG. 10 shows a multi-tenancy management apparatus 1000 according to an embodiment of this application. The container cluster-based multi-tenancy management apparatus 1000 may be the NFVO in the embodiment shown in FIG. 4A and FIG. 4B or FIG. 6, and can implement the function of the NFVO in the method provided in embodiments of this application. Alternatively, the container cluster-based multi-tenancy management apparatus 1000 may be an apparatus that can support the NFVO in implementing the function of the NFVO in the method provided in embodiments of this application. The container cluster-based multi-tenancy management apparatus 1000 may be a chip system. In this embodiment of this application, the chip system may include a chip, or may include a chip and another discrete component.

The container cluster-based multi-tenancy management apparatus 1000 includes at least one processor 1020, configured to implement or support the container cluster-based multi-tenancy management apparatus 1000 in implementing the function of the NFVO in the method provided in embodiments of this application. For example, the processor 1020 may send a multi-tenancy management policy creation request to a CISM. For details, refer to detailed descriptions in the method embodiment. Details are not described herein again.

The container cluster-based multi-tenancy management apparatus 1000 may further include at least one memory 1030, configured to store program instructions and/or data. The memory 1030 is coupled to the processor 1020. The coupling in this embodiment of this application may be an indirect coupling or a communication connection between apparatuses, units, or modules in an electrical form, a mechanical form, or another form, and is used for information exchange between the apparatuses, the units, or the modules. The processor 1020 may cooperate with the memory 1030. The processor 1020 may execute the program instructions stored in the memory 1030. At least one of the at least one memory may be included in the processor.

The container cluster-based multi-tenancy management apparatus 1000 may further include a communication interface 1010, configured to communicate with another device through a transmission medium, so that an apparatus in the container cluster-based multi-tenancy management apparatus 1000 may communicate with the another device. For example, the another device may be a VNFM. The processor 1020 may send and receive data through the communication interface 1010.

A specific connection medium between the communication interface 1010, the processor 1020, and the memory 1030 is not limited in this embodiment of this application. In this embodiment of this application, the memory 1030, the processor 1020, and the communication interface 1010 are connected to each other through a bus 1040 in FIG. 10. The bus is represented by using a thick line in FIG. 10. A connection manner between other components is merely an example for descriptions, and is not limited thereto. The bus may be classified into an address bus, a data bus, a control bus, and the like. For ease of representation, only one thick line is for representing the bus in FIG. 10, but this does not mean that there is only one bus or only one type of bus.

In this embodiment of this application, the processor 1020 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In this embodiment of this application, the memory 1030 may be a non-volatile memory, for example, a hard disk drive (hard disk drive, HDD) or a solid-state drive (solid-state drive, SSD), or may be a volatile memory (volatile memory), for example, a random access memory (random-access memory, RAM). The memory is any other medium that can carry or store expected program code in a form of an instruction structure or a data structure and that can be accessed by a computer, but is not limited thereto. The memory in embodiments of this application may alternatively be a circuit or any other apparatus that can implement a storage function, and is configured to store program instructions and/or data.

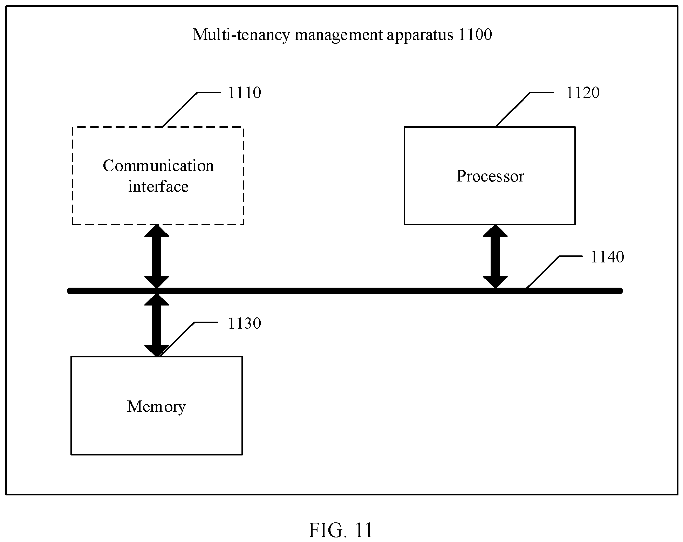

FIG. 11 shows a multi-tenancy management apparatus 1100 according to an embodiment of this application. The container cluster-based multi-tenancy management apparatus 1100 may be the VNFM in the embodiment shown in FIG. 4A and FIG. 4B or FIG. 6, and can implement the function of the VNFM in the method provided in embodiments of this application. Alternatively, the container cluster-based multi-tenancy management apparatus 1100 may be an apparatus that can support the VNFM in implementing the function of the VNFM in the method provided in embodiments of this application. The container cluster-based multi-tenancy management apparatus 1100 may be a chip system. In this embodiment of this application, the chip system may include a chip, or may include a chip and another discrete component.

The container cluster-based multi-tenancy management apparatus 1100 includes at least one processor 1120, configured to implement or support the container cluster-based multi-tenancy management apparatus 1100 in implementing the function of the NFVO in the method provided in embodiments of this application. For example, the processor 1120 may obtain indication information. For details, refer to detailed descriptions in the method embodiment. Details are not described herein again.

The container cluster-based multi-tenancy management apparatus 1100 may further include at least one memory 1130, configured to store program instructions and/or data. The memory 1130 is coupled to the processor 1120. The coupling in this embodiment of this application may be an indirect coupling or a communication connection between apparatuses, units, or modules in an electrical form, a mechanical form, or another form, and is used for information exchange between the apparatuses, the units, or the modules. The processor 1120 may cooperate with the memory 1130. The processor 1120 may execute the program instructions stored in the memory 1130. At least one of the at least one memory may be included in the processor.

The container cluster-based multi-tenancy management apparatus 1100 may further include a communication interface 1110, configured to communicate with another device through a transmission medium, so that an apparatus in the container cluster-based multi-tenancy management apparatus 1100 may communicate with the another device. For example, the another device may be an NFVO. The processor 1120 may send and receive data through the communication interface 1110.

A specific connection medium between the communication interface 1110, the processor 1120, and the memory 1130 is not limited in this embodiment of this application. In this embodiment of this application, the memory 1130, the processor 1120, and the communication interface 1110 are connected to each other through a bus 1140 in FIG. 11. The bus is represented by using a thick line in FIG. 11. A connection manner between other components is merely an example for descriptions, and is not limited thereto. The bus may be classified into an address bus, a data bus, a control bus, and the like. For ease of representation, only one thick line is for representing the bus in FIG. 11, but this does not mean that there is only one bus or only one type of bus.

In this embodiment of this application, the processor 1120 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In this embodiment of this application, the memory 1130 may be a non-volatile memory, for example, a hard disk drive (hard disk drive, HDD) or a solid-state drive (solid-state drive, SSD), or may be a volatile memory (volatile memory), for example, a random access memory (random-access memory, RAM). The memory is any other medium that can carry or store expected program code in a form of an instruction structure or a data structure and that can be accessed by a computer, but is not limited thereto. The memory in embodiments of this application may alternatively be a circuit or any other apparatus that can implement a storage function, and is configured to store program instructions and/or data.

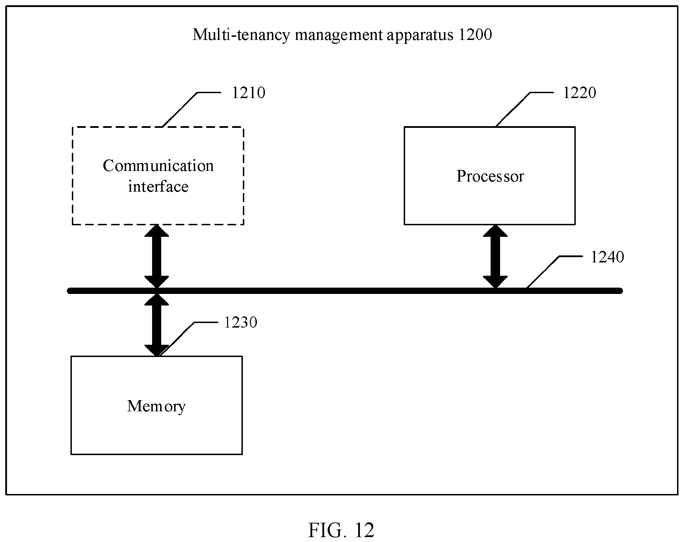

FIG. 12 shows a multi-tenancy management apparatus 1200 according to an embodiment of this application. The container cluster-based multi-tenancy management apparatus 1200 may be the CISM in the embodiment shown in FIG. 4A and FIG. 4B or FIG. 6, and can implement the function of the CISM in the method provided in embodiments of this application. Alternatively, the container cluster-based multi-tenancy management apparatus 1200 may be an apparatus that can support the CISM in implementing the function of the CISM in the method provided in embodiments of this application. The container cluster-based multi-tenancy management apparatus 1200 may be a chip system. In this embodiment of this application, the chip system may include a chip, or may include a chip and another discrete component.

The container cluster-based multi-tenancy management apparatus 1200 includes at least one processor 1220, configured to implement or support the container cluster-based multi-tenancy management apparatus 1200 in implementing the function of the CISM in the method provided in embodiments of this application. For example, the processor 1220 may create a multi-tenancy management policy based on an affinity/anti-affinity group and a tenant identifier. For details, refer to detailed descriptions in the method embodiment. Details are not described herein again.

The container cluster-based multi-tenancy management apparatus 1200 may further include at least one memory 1230, configured to store program instructions and/or data. The memory 1230 is coupled to the processor 1220. The coupling in this embodiment of this application may be an indirect coupling or a communication connection between apparatuses, units, or modules in an electrical form, a mechanical form, or another form, and is used for information exchange between the apparatuses, the units, or the modules. The processor 1220 may cooperate with the memory 1230. The processor 1220 may execute the program instructions stored in the memory 1230. At least one of the at least one memory may be included in the processor.

The container cluster-based multi-tenancy management apparatus 1200 may further include a communication interface 1210, configured to communicate with another device through a transmission medium, so that an apparatus in the container cluster-based multi-tenancy management apparatus 1200 may communicate with the another device. For example, the another device may be a VNFM. The processor 1220 may send and receive data through the communication interface 1210.

A specific connection medium between the communication interface 1210, the processor 1220, and the memory 1230 is not limited in this embodiment of this application. In this embodiment of this application, the memory 1230, the processor 1220, and the communication interface 1210 are connected to each other through a bus 1240 in FIG. 12. The bus is represented by using a thick line in FIG. 12. A connection manner between other components is merely an example for descriptions, and is not limited thereto. The bus may be classified into an address bus, a data bus, a control bus, and the like. For ease of representation, only one thick line is for representing the bus in FIG. 12, but this does not mean that there is only one bus or only one type of bus.

In this embodiment of this application, the processor 1220 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In this embodiment of this application, the memory 1230 may be a non-volatile memory, for example, a hard disk drive (hard disk drive, HDD) or a solid-state drive (solid-state drive, SSD), or may be a volatile memory (volatile memory), for example, a random access memory (random-access memory, RAM). The memory is any other medium that can carry or store expected program code in a form of an instruction structure or a data structure and that can be accessed by a computer, but is not limited thereto. The memory in embodiments of this application may alternatively be a circuit or any other apparatus that can implement a storage function, and is configured to store program instructions and/or data.

An embodiment of this application further provides a computer-readable storage medium, including instructions. When the instructions are run on a computer, the computer is enabled to perform the method performed by the NFVO, the VNFM, or the CISM in the embodiment shown in FIG. 4A and FIG. 4B or FIG. 6.

An embodiment of this application further provides a computer program product, including instructions. When the instructions are run on a computer, the computer is enabled to perform the method performed by the NFVO, the VNFM, or the CISM in the embodiment shown in FIG. 4A and FIG. 4B or FIG. 6.

An embodiment of this application provides a chip system. The chip system includes a processor and may further include a memory, and is configured to implement the function of the NFVO, the VNFM, or the CISM in the foregoing method. The chip system may include a chip, or may include a chip and another discrete component.

An embodiment of this application provides a system. The system includes the foregoing NFVO, VNFM, and CISM.

All or some of the methods in embodiments of this application may be implemented by using software, hardware, firmware, or any combination thereof. When software or firmware is used to implement the methods, all or some of the methods may be implemented in a form of a computer program product. The computer program product includes one or more computer instructions. When the computer program instructions are loaded and executed on a computer, the procedures or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible to the computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD for short)), a semiconductor medium (for example, an SSD), or the like.

It is clearly that, a person skilled in the art can make various modifications and variations to this application without departing from the scope of this application. This application is intended to cover these modifications and variations of this application provided that they fall within the scope of protection defined by the following claims and their equivalent technologies.

## Claims

1. A multi-tenancy management method, comprising:
receiving, by a virtualised network function manager VNFM, an instantiation request of a VNF, wherein the instantiation request comprises a tenant identifier of a container object invoked by the VNF;
obtaining, by the VNFM, indication information, wherein the indication information indicates whether the container object invoked by the VNF and another container object in a same tenant in which the container object is located are deployed in a same spatial scope, and the spatial scope comprises a container cluster and/or a namespace in the container cluster;
sending, by the VNFM, a container object creation request to a container infrastructure service management CISM, wherein the creation request comprises an identifier of the container object, the tenant identifier of the container object invoked by the VNF, and the indication information; and
receiving, by the VNFM, a container object creation response sent by the CISM, to complete instantiation of the VNF.

2. The method according to claim 1, wherein the indication information comprises an affinity/anti-affinity rule of the container object, the affinity/anti-affinity rule comprises an identifier of an affinity/anti-affinity group in which the container object is located, and an application scope of the affinity/anti-affinity group, and the application scope comprises the spatial scope.

3. The method according to claim 2, wherein the obtaining, by the VNFM, indication information comprises:
obtaining, by the VNFM, the affinity/anti-affinity rule from a virtualised network function descriptor VNFD corresponding to the VNF.

4. The method according to claim 1, wherein the indication information comprises an identifier of a spatial scope used in a lifecycle management operation of the VNF.

5. The method according to claim 4, wherein the obtaining, by the VNFM, indication information comprises:
sending, by the VNFM, a lifecycle management grant request of the VNF to a network functions virtualization orchestrator NFVO, wherein the lifecycle management grant request comprises a deployment location constraint of the VNF, and a scope of the deployment location constraint comprises the spatial scope; and
receiving, by the VNFM, a lifecycle management grant response sent by the NFVO, wherein the lifecycle management grant response comprises a scope of the deployment location constraint allowed by the NFVO to be used by the VNFM in the lifecycle management operation, and the scope of the deployment location constraint allowed by the NFVO is the indication information.

6. The method according to any one of claims 1 to 5, wherein the tenant identifier of the container object invoked by the VNF instance is an identifier of the VNF instance or an identifier of a container object package used by the VNF instance.

7. A multi-tenancy management method, comprising:
receiving, by a container infrastructure service management CISM, a container object creation request sent by a virtualised network function manager VNFM, wherein the creation request comprises an identifier of a container object that the VNFM requests to create, a tenant identifier of the container object, and indication information, the indication information indicates whether the container object and another container object in a same tenant in which the container object is located are deployed in a same spatial scope, and the spatial scope comprises a container cluster and/or a namespace in the container cluster;
creating, by the CISM, the container object based on the identifier of the container object, the tenant identifier of the container object, and the indication information; and
sending, by the CISM, a container object creation response to the VNFM.

8. The method according to claim 7, wherein the indication information comprises an affinity/anti-affinity rule of the container object, the affinity/anti-affinity rule comprises an identifier of an affinity/anti-affinity group in which the container object is located, and an application scope of the affinity/anti-affinity group, and the application scope comprises the spatial scope.

9. The method according to claim 8, wherein the creating, by the CISM, the container object based on the indication information comprises:
determining that a deployment location of the another container object of the tenant in which the container object is located is a first spatial scope; and
when the indication information indicates that the container object and the another container object in the same tenant in which the container object is located are deployed in a same spatial scope, creating the container object in the first spatial scope; or when the indication information indicates that the container object and the another container object in the same tenant in which the container object is located are not deployed in a same spatial scope, creating the container object in a second spatial scope, wherein the first spatial scope is different from the second spatial scope.

10. The method according to claim 7, wherein the indication information comprises an identifier of a spatial scope used in a lifecycle management operation of the tenant of the container object.

11. The method according to claim 10, wherein the creating, by the CISM, the container object based on the indication information comprises:
creating the container object in a spatial scope corresponding to the identifier of the spatial scope.

12. The method according to claim 7, wherein the method further comprises:
receiving, by the CISM, a multi-tenancy management policy creation request sent by a network functions virtualization orchestrator NFVO, wherein the creation request comprises a tenant identifier of a container object invoked by a virtualised network function VNF instance and an affinity/anti-affinity group between the VNF instance and another VNF instance of an NS instance; and
creating, by the CISM, a multi-tenancy management policy based on the affinity/anti-affinity group and the tenant identifier, wherein the multi-tenancy management policy indicates whether container objects separately invoked by the tenant and another tenant are deployed in a same spatial scope, the spatial scope comprises a container cluster and/or a namespace in the container cluster, and the tenant and the another tenant are tenants of container objects invoked by VNF instances comprised in the NS instance.

13. The method according to claim 7, wherein a multi-tenancy management policy comprises the tenant identifier of the container object, an identifier of an affinity/anti-affinity group in which a container object comprised in the tenant is located, an affinity/anti-affinity type, and an application scope of the affinity/anti-affinity group, and the application scope comprises the spatial scope.

14. The method according to claim 12 or 13, wherein the creating, by the CISM, the container object based on the indication information comprises:
creating, by the CISM, the container object based on the identifier of the container object, the tenant identifier of the container object, the indication information, and the multi-tenancy management policy.

15. The method according to claim 14, wherein the indication information comprises an affinity/anti-affinity rule of the container object, and the creating, by the CISM, the container object based on the identifier of the container object, the tenant identifier of the container object, the indication information, and the multi-tenancy management policy comprises:
determining that a deployment location of the another container object of the tenant in which the container object is located is a third spatial scope; and
determining that the third spatial scope meets the multi-tenancy management policy, and when the indication information indicates that the container object and the another container object in the same tenant in which the container object is located are deployed in a same spatial scope, creating the container object in the third spatial scope; or
when the indication information indicates that the container object and the another container object in the same tenant in which the container object is located are not deployed in a same spatial scope, creating the container object in a fourth spatial scope, wherein the fourth spatial scope meets the multi-tenancy management policy.

16. The method according to any one of claims 12 to 15, wherein the method further comprises:
receiving, by the CISM, a multi-tenancy management policy deletion request sent by the NFVO, wherein the deletion request comprises the tenant identifier; and
deleting, by the CISM, the multi-tenancy management policy related to the tenant identifier.

17. A multi-tenancy management apparatus, comprising:
a receiving module, configured to receive an instantiation request of a VNF, wherein the instantiation request comprises a tenant identifier of a container object invoked by the VNF;
an obtaining module, configured to obtain indication information, wherein the indication information indicates whether the container object invoked by the VNF and another container object in a same tenant in which the container object is located are deployed in a same spatial scope, and the spatial scope comprises a container cluster and/or a namespace in the container cluster; and
a sending module, configured to send a container object creation request to a container infrastructure service management CISM, wherein the creation request comprises an identifier of the container object, the tenant identifier of the container object invoked by the VNF, and the indication information, wherein
the receiving module is further configured to receive a container object creation response sent by the CISM, to complete instantiation of the VNF.

18. The apparatus according to claim 17, wherein the indication information comprises an affinity/anti-affinity rule of the container object, the affinity/anti-affinity rule comprises an identifier of an affinity/anti-affinity group in which the container object is located, and an application scope of the affinity/anti-affinity group, and the application scope comprises the spatial scope.

19. The apparatus according to claim 18, wherein the obtaining module is specifically configured to:
obtain the affinity/anti-affinity rule from a virtualised network function descriptor VNFD corresponding to the VNF.

20. The apparatus according to claim 17, wherein the indication information comprises an identifier of a spatial scope used in a lifecycle management operation of the VNF.

21. The apparatus according to claim 20, wherein the sending module is specifically configured to:
send a lifecycle management grant request of the VNF to a network functions virtualization orchestrator NFVO, wherein the lifecycle management grant request comprises a deployment location constraint of the VNF, and a scope of the deployment location constraint comprises the spatial scope; and
the receiving module is specifically configured to receive a lifecycle management grant response sent by the NFVO, wherein the lifecycle management grant response comprises a scope of the deployment location constraint allowed by the NFVO to be used by the apparatus in the lifecycle management operation, and the scope of the deployment location constraint allowed by the NFVO is the indication information.

22. The apparatus according to any one of claims 17 to 21, wherein the tenant identifier of the container object invoked by the VNF instance is an identifier of the VNF instance or an identifier of a container object package used by the VNF instance.

23. A multi-tenancy management apparatus, comprising:
a receiving module, configured to receive a container object creation request sent by a virtualised network function manager VNFM, wherein the creation request comprises an identifier of a container object that the VNFM requests to create, a tenant identifier of the container object, and indication information, the indication information indicates whether the container object and another container object in a same tenant in which the container object is located are deployed in a same spatial scope, and the spatial scope comprises but is not limited to a container cluster and/or a namespace in the container cluster;
a creation module, configured to create the container object based on the identifier of the container object, the tenant identifier of the container object, and the indication information; and
a sending module, configured to send a container object creation response to the VNFM.

24. The apparatus according to claim 23, wherein the indication information comprises an affinity/anti-affinity rule of the container object, the affinity/anti-affinity rule comprises an identifier of an affinity/anti-affinity group in which the container object is located, and an application scope of the affinity/anti-affinity group, and the application scope comprises the spatial scope.

25. The apparatus according to claim 24, wherein the creation module is specifically configured to:
determine that a deployment location of the another container object of the tenant in which the container object is located is a first spatial scope; and
when the indication information indicates that the container object and the another container object in the same tenant in which the container object is located are deployed in a same spatial scope, create the container object in the first spatial scope; or when the indication information indicates that the container object and the another container object in the same tenant in which the container object is located are not deployed in a same spatial scope, create the container object in a second spatial scope, wherein the first spatial scope is different from the second spatial scope.

26. The apparatus according to claim 23, wherein the indication information comprises an identifier of a spatial scope used in a lifecycle management operation of the tenant of the container object.

27. The apparatus according to claim 26, wherein the creation module is specifically configured to:
create the container object in a spatial scope corresponding to the identifier of the spatial scope.

28. The apparatus according to claim 23, wherein the receiving module is further configured to:
receive a multi-tenancy management policy creation request sent by a network functions virtualization orchestrator NFVO, wherein the creation request comprises a tenant identifier of a container object invoked by a virtualised network function VNF instance and an affinity/anti-affinity group between the VNF instance and another VNF instance of an NS instance; and
the creation module is further configured to create a multi-tenancy management policy based on the affinity/anti-affinity group and the tenant identifier, wherein the multi-tenancy management policy indicates whether container objects separately invoked by the tenant and another tenant are deployed in a same spatial scope, the spatial scope comprises a container cluster and/or a namespace in the container cluster, and the tenant and the another tenant are tenants of container objects invoked by VNF instances comprised in the NS instance.

29. The apparatus according to claim 28, wherein the multi-tenancy management policy comprises the tenant identifier of the container object, an identifier of an affinity/anti-affinity group in which a container object comprised in the tenant is located, an affinity/anti-affinity type, and an application scope of the affinity/anti-affinity group, and the application scope comprises the spatial scope.

30. The apparatus according to claim 28 or 29, wherein the creation module is specifically configured to:
create the container object based on the identifier of the container object, the tenant identifier of the container object, the indication information, and the multi-tenancy management policy.

31. The apparatus according to claim 30, wherein the indication information comprises an affinity/anti-affinity rule of the container object, and the creation module is specifically configured to:
determine that a deployment location of the another container object of the tenant in which the container object is located is a third spatial scope; and
determine that the third spatial scope meets the multi-tenancy management policy, and when the indication information indicates that the container object and the another container object in the same tenant in which the container object is located are deployed in a same spatial scope, create the container object in the third spatial scope; or
when the indication information indicates that the container object and the another container object in the same tenant in which the container object is located are not deployed in a same spatial scope, create the container object in a fourth spatial scope, wherein the fourth spatial scope meets the multi-tenancy management policy.

32. The apparatus according to any one of claims 23 to 31, wherein the receiving module is further configured to:
receive a multi-tenancy management policy deletion request sent by the NFVO, wherein the deletion request comprises the tenant identifier; and
the creation module is further configured to delete the multi-tenancy management policy related to the tenant identifier.

33. A multi-tenancy management apparatus, comprising a processor, wherein the processor is configured to: be coupled to a memory, and read and execute instructions in the memory, to implement the method according to any one of claims 1 to 6 or 7 to 16.

34. A readable storage medium, comprising a program or instructions, wherein when the program or the instructions is/are executed, the method according to any one of claims 1 to 6 or 7 to 16 is performed.

35. A computer program product, comprising computer-readable instructions, wherein when a communication apparatus reads and executes the computer-readable instructions, the communication apparatus is enabled to perform the method according to any one of claims 1 to 6 or 7 to 16.
